(19) Europäisches Patentamt
European Patent Office
Office européen des brevets

(11) EP 4 374 988 A1

(12) **EUROPEAN PATENT APPLICATION**
published in accordance with Art. 153(4) EPC

(43) Date of publication:
**29.05.2024 Bulletin 2024/22**

(21) Application number: **22845773.5**

(22) Date of filing: **01.07.2022**

(51) International Patent Classification (IPC):
***B22F 3/02*** (2006.01) ***B22F 3/10*** (2006.01)
***B28B 1/24*** (2006.01) ***C04B 35/634*** (2006.01)
***C08G 2/38*** (2006.01) ***C08K 3/011*** (2018.01)
***C08K 3/013*** (2018.01) ***C08L 59/00*** (2006.01)

(52) Cooperative Patent Classification (CPC):
**B22F 3/02; B22F 3/10; B28B 1/24; C04B 35/634; C08G 2/38; C08K 3/011; C08K 3/013; C08L 59/00**

(86) International application number:
**PCT/JP2022/026526**

(87) International publication number:
**WO 2023/002839 (26.01.2023 Gazette 2023/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.07.2021 JP 2021119164**
**19.07.2021 JP 2021119163**

(71) Applicant: **Asahi Kasei Kabushiki Kaisha**
**Tokyo 1000006 (JP)**

(72) Inventors:
- **MIYAZAKI Kuon**
  **Tokyo 100-0006 (JP)**
- **FUKAI Motohiro**
  **Tokyo 100-0006 (JP)**

(74) Representative: **Hoffmann Eitle**
**Patent- und Rechtsanwälte PartmbB**
**Arabellastraße 30**
**81925 München (DE)**

(54) **COMPOSITION FOR INORGANIC POWDER INJECTION MOLDING, AND MOLDED BODY AND SINTERED BODY EACH USING SAME**

(57) An object of the present disclosure is to provide a composition containing a modified polyacetal suitable for applications of inorganic powder injection molding. A composition for inorganic powder injection molding of the present disclosure includes a sinterable inorganic powder and an organic binder containing a modified polyacetal (C) including a polyacetal segment (A) and a modification segment (B), wherein the number average molecular weight of the above modification segment (B) is 500 to 10000.

EP 4 374 988 A1

## Description

TECHNICAL FIELD

The present disclosure relates to a raw material for molding used in the production of an inorganic powder sintered molded body, and a molded body and a sintered body using the same.

BACKGROUND

As a method for producing metal and ceramic parts, the powder injection molding method is well-known. In this method, a composition for inorganic powder injection molding is produced by melt-kneading a sinterable inorganic powder such as powders of metals, ceramics, and cermets, and an organic binder composed of an organic compound such as polyethylene, polypropylene, and paraffin wax. Subsequently, the composition is injection molded to form a green molded body, which is then subjected to a degreasing step to remove the organic binder components. Finally, the degreased molded body is sintered to obtain a desired part. This method has the advantages of enabling mass production of parts with complex shapes at once, high degree of freedom of shape, high freedom of materials, high dimensional accuracy, and high mechanical strength of sintered products.

Polyacetal (POM) is well-known as one of organic compounds to be used as an ingredient of a binder (e.g., organic binder) used in this powder injection molding method. POM has the advantage of increasing the strength of green molded bodies, preventing deformation during degreasing, and remaining no residues after sintering.

On the other hand, its compatibility with organic compounds, such as polyethylene, which is blended to maintain the shape of a molded body during degreasing, and paraffin wax that is blended to maintain good injectability, is poor. In order to obtain a homogeneous feedstock, the blending amount of POM needs to be reduced, which limits the effect of POM.

To address this issue, JP 2001-106581 A discloses the use of a polyolefin modified with methacrylic acid or the like, in an organic binder for the purpose of improving the compatibility with POM.

In addition, JP 2009-542880 A proposes an organic binder including POM, polyethylene, and poly-1,3-dioxepane. Although POM and polyethylene have low compatibility, blending of poly-1,3-dioxepane provides an organic binder having good dispersibility.

In the meanwhile, to improve the compatibility with other organic compounds while maintaining the characteristics of POM, it is effective to use a modified polyacetal resin in which a different molecular structure, such as polyolefin, is introduced into the molecular chain of POM. As such POM, JP 2001-514017 A proposes a block copolymer composed of a polyoxymethylene chain and a hydrogenated polybutadiene. In addition, JP H07-293290 A proposes the use of a polyacetal resin modified with a polyolefin-based polymer as a binder composed of an organic compound. It proposes a composition for use in production of sintered molded bodies containing the polyacetal resin modified with the polyolefin-based polymer as a binder, for promoting mixing with a polyolefin resin.

Furthermore, the use of a modified polyacetal as a binder composed of an organic compound is also proposed in JP 2003-172273.

Furthermore, a binder containing POM used in the powder injection molding method has a drawback in that it is prone to decompose during the kneading step with a sinterable inorganic powder and injection molding step due to applied heat.

In the meantime, in order to remain the advantages of POM while suppressing its decomposition in the kneading and injection molding steps, it is effective to use a modified polyacetal resin in which a different molecular structure, such as polyolefin, is introduced into the molecular chain of POM.

As such POM, WO 2001/009213 A1 proposes a block copolymer consisting of a polyoxymethylene chain and hydrogenated polybutadiene.

In addition, JP H09-111306 A proposes the use of a polyacetal resin modified with a polyolefin-based polymer as a binder composed of an organic compound. It discloses that usage of the polyacetal resin modified with a polyolefin-based polymer as a binder in the powder injection molding method provides high thermal decomposition performance during the degreased step and reduced deformation during heating.

Furthermore, the use of a modified polyacetal as a binder composed of an organic compound is also proposed in JP 2004-076153 A.

CITATION LIST

Patent Literature

PTL 1: JP 2001-106581 A
PTL 2: JP 2009-542880 A
PTL 3: WO 2001/009213 A1
PTL 4: JP H09-111306 A
PTL 5: JP 2004-076153 A

SUMMARY

(Technical Problem)

An object of the present disclosure is to provide a composition containing a modified polyacetal suitable for applications of inorganic powder injection molding.

With regard to a disclosure (i), the method disclosed in JP 2001-106581 A requires a long time for melt kneading with POM and the other resin component, and the effect to improve the dispersibility with POM is limited.

Furthermore, in the method disclosed in JP 2009-542880 A, although the disperseability is indeed improved by blending poly-1,3-dioxepane, it is necessary to blend polyolefin from the viewpoint of shape retentionability during degreasing. This requires time to melt each of POM and polyolefin, and the effect on improvement of disperseability is also limited.

Furthermore, the method described in WO 2001/009213 A1 excels in improving the compatibility with polyolefin and an inorganic filler by using an (A)-(B)-(A) block copolymer, where (A) represents the polyacetal segment and (B) represents the hydrogenated polybutadiene segment. However, the blending of the sinterable inorganic powder as described in this application was not anticipated in that publication.

Furthermore, in the methods disclosed in JP H09-111306 A and JP 2004-076153 A, a resin such as polyolefin is blended in addition to the modified polyacetal, resulting in problems such as prolonged melt kneading time, and variation of dispersibility from lot to lot.

Accordingly, an object of the disclosure (I) is to provide a composition for inorganic powder injection molding containing a modified polyacetal which can reduce kneading time and has excellent injection moldability.

With regard to a disclosure (II), the method disclosed in JP 2001-514017 A is intended to form large-diameter gears with high roundness and excellent dimensional stability and durability, and it is not envisioned to blend a sinterable inorganic powder.

Furthermore, in the method disclosed in JP H09-111306 A, although the structure of the polyolefin to be introduced is clear, the structure of POM, which is the main structure of a modified polyacetal, is unclear, and there is a problem of insufficient effect of inhibiting degradation.

Furthermore, in the method disclosed in JP 2004-076153 A, although a modified polyacetal is disclosed, a specific structure thereof is not disclosed and there is a problem of insufficient effect to inhibit degradation.

Accordingly, an object of the disclosure (II) is to provide a composition for inorganic powder injection molding containing a modified polyacetal which does not impair the shape retentionability of a green molded body relying on the rigidity inherent to a polyacetal resin, and in which degradation is suppressed in the kneading step with an inorganic powder and the injection molding step.

(Solution to Problem)

The gist of the disclosures (I) and (II) is as follows

With regard to the disclosure (I), the present inventors have diligently studied to solve the above-mentioned problem and discovered that a composition for inorganic powder injection molding containing an organic binder containing a modified polyacetal (C) including a polyacetal segment (A) and a modification segment (B) having a number average molecular weight in a specific range, and having a melt flow rate at 190 °C, 2.16 kg, of 70 g/10 minute or more and 160 g/10 minute or less can solve the above problem, thereby conceiving of the disclosure (I).

Specifically, the disclosure (I) is as follows:

[Disclosure (I)]

[1] A composition for inorganic powder injection molding comprising:

a sinterable inorganic powder; and
an organic binder comprising a modified polyacetal (C) including a polyacetal segment (A) and a modification

segment (B),
wherein a melt flow rate (MFR) of the modified polyacetal (C) measured under conditions of 190 °C, 2.16 kg is 70 g/10 min or more and 160 g/10 min or less, and
a number average molecular weight of the modification segment (B) is 500 to 10,000.

[2] The composition for inorganic powder injection molding according to [1], wherein the modification segment (B) is a polyolefin.
[3] The composition for inorganic powder injection molding according to [1] or [2], wherein the modification segment (B) is a hydrogenated polybutadiene.
[4] The composition for inorganic powder injection molding according to any one of [1] to [3], wherein a number average molecular weight of the modified polyacetal (C) is 10,000 to 50,000.
[5] The composition for inorganic powder injection molding according to any one of [1] to [4], wherein the polyacetal segment (A) is composed of 95.0 to 99.9 mol% of an oxymethylene unit and 0.1 to 5.0 mol% of an oxyalkylene unit represented by the formula (1):

[Chem. 1]

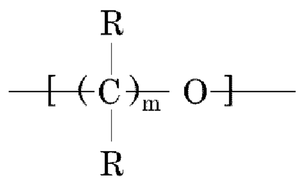

(1)

(in the formula, R is independently selected from hydrogen, an alkyl group, a substituted alkyl group, an aryl group, and a substituted aryl group, and m is an integer selected from 2 to 6).
[6] The composition for inorganic powder injection molding according to any one of [1] to [5], wherein the modified polyacetal (C) is a block copolymer represented by (A)-(B)-(A).
[7] The composition for inorganic powder injection molding according to any one of [1] to [6], further comprising a lubricant
[8] An injection-molded body comprising the composition for inorganic powder injection molding according to any one of [1] to [7].
[9] A sintered body produced by degreasing and sintering the injection-molded body according to [8].

With regard to the disclosure (II), the present inventors have made a diligent study to solve the above-mentioned problem and have discovered that a composition for inorganic powder injection molding containing a modified polyacetal, in which the number average molecular weight of the modified polyacetal, the number average molecular weight of the modified portion, and the molar ratio of an oxymethylene unit and a oxyalkylene unit constituting the polyacetal segment is adjusted can solve the above problem, thereby conceiving of the disclosure (II).
Specifically, the disclosure (II) is as follows:

[Disclosure (II)]

[1] A composition for inorganic powder injection molding comprising:

a sinterable inorganic powder; and
an organic binder comprising a modified polyacetal (C) including a polyacetal segment (A) and a modification segment (B),
wherein a number average molecular weight of the modified polyacetal (C) is 10000 to 500000,
a number average molecular weight of the modification segment (B) is 500 to 10000, and
the polyacetal segment (A) is composed of 95.0 to 99.9 mol% of an oxymethylene unit and 0.1 to 5.0 mol% of an oxyalkylene unit represented by the formula (1):

[Chem. 2]

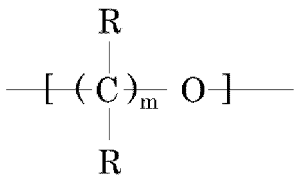

(1)

(in the formula, R is independently selected from the group consisting of hydrogen, an alkyl group, a substituted alkyl group, an aryl group, and a substituted aryl group, and m is an integer selected from 2 to 6).

[2] The composition for inorganic powder injection molding according to [1], wherein a ratio of a number average molecular weight (Mn2) of the modification segment (B) to a number average molecular weight (Mn1) of the modified polyacetal (C) (Mn2/Mn1 × 100 (%)) is 0.5% or more and 10% or less.

[3] The composition for inorganic powder injection molding according to [1] or [2], wherein the modification segment (B) is a polyolefin.

[4] The composition for inorganic powder injection molding according to any one of [1] to [3], wherein the modification segment (B) is a hydrogenated polybutadiene.

[5] The composition for inorganic powder injection molding according to any one of [1] to [4], wherein the modified polyacetal (C) is a block copolymer represented by (A)-(B)-(A).

[6] The composition for inorganic powder injection molding according to any one of [1] to [5], wherein a polyacetal molecular weight reduction ratio of a weight average molecular weight of a modified polyacetal extracted from the composition for inorganic powder injection molding in chloroform under a condition of 80 °C for 8 hours to a weight average molecular weight of the modified polyacetal (C) is 40% or less.

[7] The composition for inorganic powder injection molding according to any one of [1] to [6], comprising a polyolefin resin having a melt flow rate (MFR) measured under conditions of 230 °C, 2.16 kg of 60 g/10 min or more.

[8] An injection-molded body comprising the composition for inorganic powder injection molding according to any one of [1] to [7].

[9] A sintered body produced by degreasing and sintering the injection-molded body according to [8].

(Advantageous Effect)

According to the present disclosure, a composition containing a modified polyacetal suitable for applications of inorganic powder injection molding can be provided.

In particular, according to the disclosure (I), a homogeneous composition for inorganic powder injection molding can be obtained in a short melt kneading time. In addition, by using the composition for inorganic powder injection molding of the disclosure (I), a sintered body can be obtained with high yield because excellent injection moldability are achieved and no cracking or swelling occurs during the degreasing and sintering steps. Among other things, even if the amount of the resin component other than the polyacetal resin in the composition for inorganic powder injection molding is small (preferably, other resin components are not blended), the kneading time can be shortened and excellent injection moldability can be achieved.

Furthermore, according to the disclosure (II), it is possible to obtain a composition for inorganic powder injection molding containing a modified polyacetal which does not impair the shape retentionability of a green molded body relying on the rigidity inherent to a polyacetal resin, and in which decomposition is suppressed in the kneading step with an inorganic powder and the injection molding step.

In addition, by using the composition for inorganic powder injection molding of the disclosure (II), a sintered body can be obtained with high yield because excellent injection moldability are achieved and no cracking or swelling occurs during the degreasing and sintering steps.

DETAILED DESCRIPTION

The following provides details of an embodiment to implement the present disclosure. Note that the present disclosure is not limited by the description given below, and may be implemented with various changes or modifications that are within the essential scope thereof.

A composition for inorganic powder injection molding of the present embodiment is an composition for inorganic powder injection molding containing a sinterable inorganic powder and an organic binder containing a modified polyacetal (C) including a polyacetal segment (A) and a modification segment (B), wherein the number average molecular weight of the above modification segment (B) is 500 to 10000. The composition for inorganic powder injection molding of the present embodiment can be used for inorganic powder injection applications.
Preferred embodiments of the above composition for inorganic powder injection molding include the following the disclosures (I) and (II).
The disclosure (I) will be described below.

[Disclosure (I)]

[Composition for inorganic powder injection molding]

A composition for inorganic powder injection molding of the present embodiment includes a sinterable inorganic powder and an organic binder containing a modified polyacetal (C) composed of a polyacetal segment (A) and a modification segment (B).
In addition to the above sinterable inorganic powder and the above organic binder, the composition for inorganic powder injection molding of the present embodiment may further contain other additives. The composition may also consist only of the above inorganic powder and the above organic binder.
It is preferable that the composition for inorganic powder injection molding of the present embodiment includes only the above modified polyacetal (C), an unreacted polyacetal to be described below, a polyamide resin serving as a nitrogen-containing compound to be described below, and a resin serving as a lubricant, and does not contain polyolefin resins or the like which is blended to maintain the shape of a molded product during the degreasing. The mass ratio of a backbone resin other than the polyacetal resin (resins other than the above modified polyacetal (C) and the unreacted polyacetal described below) blended to maintain the shape of a molded body during degreasing may be 1 part by mass or less, 0.5 parts by mass or less, and may 0.01 parts by mass or less, in 100 parts by mass of the composition for inorganic powder injection molding of the present embodiment.

<Sinterable inorganic powder>

The above inorganic powder can be selected from any known suitable sinterable inorganic powders. It is preferably selected from metal powders, alloy powders, metal carbonyl powders, ceramic powders, and mixtures thereof. Among these, metal powders and ceramic powders are particularly preferred to impart functionality.
One of the above sinterable inorganic powders may be used alone or two or more of these may be used in a combination.
The sinterable inorganic powder may be an inorganic powder having a melting point between 500 °C and 2000 °C and having an average particle diameter of 100 μm or less. Note that the above melting point can be identified from the endothermic peak top by heating under the conditions of 5 °C/min under argon flow using a differential scanning calorimetry apparatus. In addition, the average particle diameter refers to the average diameter at 50% of the cumulative weight distribution measured by a particle size distribution analyzer employing the laser diffraction scattering method. The same meanings of these terms are used below unless otherwise specified.
Specific examples of the above metal powders include powders of aluminum, magnesium, barium, calcium, cobalt, zinc, copper, nickel, iron, silicon, titanium, tungsten, and metal compounds and metal alloys based on these. Here, not only already prepared alloys but also mixtures of individual alloy components can be used.
Examples of the above ceramic powders include oxides such as zinc oxide, aluminum oxide, and zirconia; hydroxides such as hydroxyapatite; carbides such as silicon carbide; nitrides such as silicon nitride and boron nitride; halides such as fluorite; silicates such as stealite; titanates such as barium titanate and lead zirconate titanate; carbonates; phosphates; and ferrites.
The inorganic powders described above may be used alone, or several inorganic materials such as various metal powders, metal alloy powders, and ceramic powders may be used in combination. From the viewpoint of providing particularly excellent kneadability and injection moldability when used with an organic binder containing the modified polyacetal (C), preferred metal and alloy powders include those of titanium alloys and stainless steels such as SUS316L, and ceramic powders such as those of aluminum oxide and zirconia.
The average particle diameter of the above inorganic powder is preferably 30 μm or less, more preferably 20 μm or less.
The mass ratio of the above sinterable inorganic powder is preferably 70 to 95 parts by mass, more preferably 75 to 95 parts by mass, and particularly preferably 80 to 95 parts by mass with respect to 100 parts by mass of the above composition for inorganic powder injection molding. When the sinterable inorganic powder is within any of the above

ranges, it is possible to obtain a composition for use in sintered molded bodies with excellent kneadability and a melt viscosity suitable for injection molding and a green molded body with high strength.

<Organic binder>

The above organic binder preferably contains a modified polyacetal (C) composed of a polyacetal segment (A) and a modification segment (B), and further contains a lubricant. The modified polyacetal resin has the polyacetal segment and the modification segment composed of polyolefin or the like in the molecule. Therefore, even if the amount of the backbone resin other than the modified polyacetal (C), which is blended to maintain the shape of a molded product during the degreasing, is small (preferably without blending other backbone resins), the resin exhibits good adhesion to the sinterable inorganic powder and exhibits good shape retentionability during the degreasing step.

The above organic binder preferably contains a modified polyacetal mixture described below which includes a modified polyacetal (C). The organic binder may further optionally contain a lubricant, a backbone resin other than polyacetal, and additives, and may be a mixture consisting only of a modified polyacetal mixture and a lubricant. The only resin component containing the oxymethylene unit included in the organic binder is preferably the modified polyacetal (C) described below.

(Modified polyacetal mixture)

The above modified polyacetal mixture may contain the modified polyacetal (C) and may further contain a nitrogen-containing compound and a fatty acid metal salt. In particular, it is preferable that the mixture includes the modified polyacetal (C), and the optional ingredients only include the nitrogen-containing compound and the fatty acid metal salt.

-Modified polyacetal (C)-

The above organic binder includes the modified polyacetal (C) in view of kneading with the sinterable inorganic powder and thermal stability in the injection molding step.

In general, a modified polyacetal refers to a block copolymer having a polyacetal segment and a modification segment. The polyacetal segment may be a homopolymer residue consisting only of an oxymethylene unit or a copolymer residue where an oxymethylene unit and an oxyalkylene unit are copolymerized randomly. The modification segment is a component that is not classified into polyacetal segments, and examples thereof include polyolefin, polyurethane, polyester, polyamide, polystyrene, and alkyl polyacrylate.

The modified polyacetal (C) in the present embodiment has a polyacetal segment (A) and a modification segment (B) and may consist only of a polyacetal segment (A) and a modification segment (B). Furthermore, the polyacetal segment (A) is a polyacetal copolymer residue in which an oxymethylene unit and an oxyalkylene unit are randomly copolymerized, as will be described below, and the modification segment (B) is preferably a polyolefin or polyurethane.

One of the above modified polyacetals (C) may be used alone, or two or more of these may be used in combination.

The number average molecular weight of the above modified polyacetal (C) is preferably 10,000 to 500,000, more preferably 10,000 to 50,000, and even more preferably 10,000 to 20,000 from the viewpoint of obtaining a green molded body with a high yield in the injection molding step. Furthermore, it is preferably 20,000 to 200,000, more preferably 20,000 to 100,000 from the viewpoint of molding of small and thin parts.

The number average molecular weight of the above modified polyacetal (C) can be measured by GPC. Specific conditions of GPC are as follows, for example: Tosoh HLC-8120 GPC system is used as the GPC apparatus, two HFIP806 columns (30 cm columns) manufactured by Showa Denko K. K. as the columns, hexafluoroisopropanol (hereinafter referred to as HFIP) as the carrier, and polymethyl methacrylate (PMMA) manufactured by Polymer Laboratories, Inc. as the standard, and a measurement is carried out under the conditions of temperature 40 °C and a flow rate 0.5 ml/min.

The number average molecular weight of the modification segment (B) constituting the above modified polyacetal (C) is preferably 500 to 10,000 (in terms of polystyrene) from the viewpoint of obtaining a green molded body with a high yield in the injection molding step. From the viewpoint of suppressing the decomposition of the modified polyacetal (C) during kneading with the sinterable inorganic powder, the number average molecular weight (in terms of polystyrene) is more preferable 2,000 to 5,000.

Furthermore, the molecular weight distribution (Mw/Mn) of the modification segment (B) is preferably less than 2.

The number average molecular weight of the modification segment (B) can be measured using GPC. For example, the number average molecular weight can be measured at a temperature of 140 °C using 150C manufactured by Waters as the GPC apparatus, 1,2,4-trichlorobenzene as the carrier, and polystyrene as the standard samples. In cases where the number average molecular weight of the modification segment (B) in a certain modified polyacetal resin

produced by a third party needs to be measured, it is desirable to decompose the polyacetal block in advance before measurement.

The ratio of the number average molecular weight (Mn2) of the above modification segment (B) to the number average molecular weight (Mn1) of the above modified polyacetal (C) (Mn2/Mn1 × 100 (%)) is preferably 0.5% or more and 10% or less from the viewpoint of preventing cracking and swelling of a molded body during the degreasing and sintering steps, and is more preferably 0.5% or more to 5.0% or less from the viewpoint of improving the yield in the injection molding step.

Polyolefin and polyurethane are suitably used as the modification segment (B) of the above modified polyacetal (C). Polyolefin is preferred from the viewpoint of reducing residues derived from the organic binder in the degreasing step. Specific examples include polyethylene, polypropylene, ethylene-propylene copolymer, ethylene-vinyl acetate copolymer, ethylene-vinyl alcohol copolymer, polyisoprene, polybutadiene, and hydrogenated polybutadiene. Polyethylene, polypropylene, and hydrogenated polybutadiene are preferred, and hydrogenated polybutadiene is more preferred in view of shape retentionability in the degreasing step and prevention of cracking and swelling in the degreasing step.

The modification segment (B) included in the above modified polyacetal (C) may be of one type or of two or more types. From a viewpoint of ease of production, it is preferably of one type.

The polyacetal segment (A) of the above modified polyacetal (C) is composed of a polyacetal copolymer residue containing an oxymethylene unit (i.e., ($CH_2O$) unit) derived from ring-opening polymerized trioxane, and an oxyalkylene unit represented by the following formula (1) derived from ring-opening polymerized cyclic formal (or cyclic ether) (in this specification, sometimes referred to simply as an "oxyalkylene unit"). The polyacetal segment (A) preferably consists only of the above oxymethylene unit and the above oxyalkylene unit. Furthermore, in the polyacetal segment (A), i.e., the polyacetal copolymer residue, the oxymethylene unit and the oxyalkylene unit are preferably present at random.

[Chem. 3]

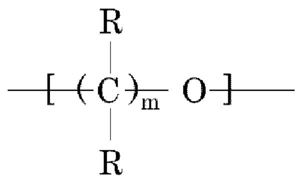

(1)

(In the formula, R is independently selected from hydrogen, an alkyl group, a substituted alkyl group, an aryl group, and a substituted aryl group, and m is an integer selected from 2 to 6.)

The oxyalkylene unit represented by the above formula (1) contained in the above polyacetal segment (A) may be of one type or of two or more types. From a viewpoint of ease of production, it is preferably of one type.

From the viewpoint of suppressing thermal decomposition of the modified polyacetal (C) in the kneading step with the sinterable inorganic powder, the above polyacetal segment (A) is composed of 95.0 to 99.9 mol% of the oxymethylene unit and 0.1 to 5.0 mol% of the oxyalkylene unit, preferably 98.0 to 99.7 mol% of the oxymethylene unit and 0.3 to 2.0% of the oxyalkylene unit.

The mol% of monomer units constituting the polyacetal segment (A) can be measured by the following method. The modified polyacetal and 1-N hydrochloric acid are charged into a pressure-resistant bottle and heated at 130 °C for 2 hours to hydrolyze the modified polyacetal to obtain an alkylene glycol component derived from cyclic formal (or cyclic ether). Although hydroxyalkylated modification segments are also present after hydrolysis, these hydroxyalkylated modification segments are present in the phase that is separated from the aqueous solution. The alkylene glycol component present in the aqueous solution after hydrolysis is quantified by gas chromatography.

Specific examples of the oxyalkylene unit represented by the above formula (1) derived from cyclic formal (or cyclic ether) includes an ethylene oxide residue, a propylene oxide residue, a 1,3-dioxolane residue, a 1,3,5-trioxepane residue, a diethylene glycol formal residue, a 1,4-butanediol formal residue, and a 1,3-dioxane residue. Among them, in view of the formation rate of the modified polyacetal (C), the oxyalkylene unit is preferably a 1,3-dioxolane residue, a 1,3,5-trioxepane residue, or a 1,4-butanediol formal residue, and more preferably a 1,3-dioxolane residue.

In particular, it is preferable that the oxyalkylene unit is a 1,3-dioxolane residue obtained by polymerizing 1,3-dioxolane that contains 500 mass ppm or less of 2-methyl-1,3-dioxolane and 15 mass ppm or less in terms of hydrogen peroxide of peroxides, and it is preferable that 10 to 500 mass ppm of one or more hindered phenols is added during the polymerization.

Note that the content of 2-methyl-1,3-dioxolane can be measured using a hydrogen flame ionization detector in a gas chromatography equipped with gas chromatograph pack 55 manufactured by GL Sciences Inc. Specifically, the content of peroxide in 1,3-dioxolane is determined using the following procedure. To a flask, 40 ml of isopropyl alcohol, 10 ml of a saturated solution of sodium iodide (where NaI is dissolved in isopropyl alcohol), 2 ml of acetic acid, and 25 g of 1,3-dioxolane are charged. The mixture is refluxed at 100 °C for about 5 minutes. Immediately thereafter, it is titrated with 0.01-N sodium thiosulfate until the color of the mixture in the flask changes from yellow to colorless. The titration volume is recorded (titration volume is denoted as A ml). For blank titration, the same procedure is repeated without using 1,3-dioxolane (titration volume is denoted as B ml). The content of peroxide is calculated by the following formula.

Amount of peroxide (in terms of hydrogen peroxide, ppm) = (A - B) × 17 × 0.01 / (25 × 1000) × 106

The above modified polyacetal (C) is preferably a block copolymer represented by polyacetal segment (A) - modification segment (B) - polyacetal segment (A) (denoted as (A)-(B)-(A) or ABA, etc., in this specification) or modification segment (B) - polyacetal segment (A) - modification segment (B) (denoted as (B)-(A)-(B) or BAB, etc., in this specification), from the viewpoint of inhibition of the decomposition of the modified polyacetal (C) during the kneading step with the sinterable inorganic powder. Furthermore, from the viewpoint of imparting strength to a green molded body, it is more preferably (A)-(B)-(A).

Note that whether a particular polyacetal resin is a block copolymer or not can be identified using known methods. For example, a method that can be used involves quantitative comparison of the amount of formaldehyde generated when the resin is decomposed using a polyacetal resin having a known structure as the reference sample.

The melt flow rate of the above modified polyacetal (C) is 70 g/10 min or more, preferably 70 g/10 min or more and 160 g/10 min or less, more preferably 90 g/10 min or more and 160 g/10 min or less, and even more preferably 90 g/10 min or more and 150 g/10 min or less, as measured under the conditions of 190 °C, 2.16 kg in accordance with ASTM-D-1238-57T. A melt flow rate of 70 g/10 min or more improves the flowability of the composition for inorganic powder injection molding, resulting in excellent injection moldability even for products with small or thin shapes. A melt flow rate of 160 g/10 min or less improves the strength of a green molded body.

The mass ratio of the above modified polyacetal (C) in 100 mass% of the above modified polyacetal mixture is preferably 95 mass% or more, more preferably 97 mass% or more and less than 100 mass%, and even more preferably 97 to 99.9 mass%.

The mass ratio of the above modified polyacetal (C) in 100 mass% of the above organic binder is preferably 1 to 40 mass%, more preferably 1 to 20%, and particularly preferably 1 to 10%, from the viewpoint of reducing decomposed products of the above polyacetal in the kneading and injection molding steps.

The mass ratio of the above modified polyacetal (C) in 100 mass% of the above composition for inorganic powder injection molding is preferably 1 to 20%, more preferably 2 to 15 mass%, and even more preferably 4 to 10%, from the viewpoint of achieving excellent shape retentionability of a green molded body containing the inorganic powder.

The ratio of the mass of the above inorganic powder to the mass of the above modified polyacetal (C) (the mass of the inorganic powder / the mass of the modified polyacetal (C)) in the above composition for inorganic powder injection molding is preferably 5 to 200, more preferably 10 to 100, and even more preferably 15 to 50 in view of the shape retentionability of a green molded body and prevention of cracking and swelling of a molded body in the degreasing and sintering steps.

The method of producing the above modified polyacetal (C) is not particularly limited and can be obtained by any known method.

Depending on the production method of the above modified polyacetal (C), an unreacted polyacetal resin and/or an unreacted polyolefin-based polymer may coexist with the modified polyacetal that is the reaction product, and a mixture where the ingredients are substantially soluble to each other or uniformly dispersed may be produced. The unreacted polyacetal resin and unreacted polyolefin-based polymer resulting from the method of producing the modified polyacetal (C) may be the thermoplastic resin described above, which is one of the ingredients in the composition for inorganic powder injection molding.

-Nitrogen-containing compound and fatty acid metal salt-

It is preferred that the above modified polyacetal mixture further contains a nitrogen-containing compound and/or a fatty acid metal salt, and it is more preferred that it contains a nitrogen-containing compound and a fatty acid metal salt.

The inclusion of the above nitrogen-containing compound and the above fatty acid metal salt provides excellent extrudability, thermal stability, and suppression on foreign matters upon production of the modified polyacetal mixture.

In addition, the fluidity of the composition for inorganic powder injection molding where the metal powder is mixed and the strength of a green molded body tend to be improved at the same time. The inclusion of the above nitrogen-containing compound and the above fatty acid metal salt improves the thermal stability of the composition for inorganic powder injection molding.

Examples of the above nitrogen-containing compound include, but are not particularly limited to, polyamide resins, amide compounds, urea derivatives, and triazine derivatives. Among these, polyamide resins are preferred from the viewpoint of achieving further excellent thermal stability of the composition for inorganic powder injection molding and further excellent strength of a green molded body. They may be used alone or in a combination of two or more.

Examples of the above polyamide resins include, but are not particularly limited to, nylon 6, nylon 11, nylon 12, nylon 66, nylon 6.10, nylon 6/6.10, nylon 6/6.6, nylon 6.6/6.10, nylon 6/6.6/6.10, and poly-β-alanine, for example.

Examples of the above amide compounds include, but are not particularly limited to, stearyl stearate amide, stearyl oleate amide, stearyl erucate amide, ethylenediamine-distearate amide, ethylenediamine-dibehenate amide, hexamethylenediamine-distearate amide, ethylenediamine-dierucate amide, xylylenediamine-dierucate amide, di(xylylenediamine-distearate amide), and sebacic acid amide, which are produced from aliphatic monocarboxylic acids, aliphatic dicarboxylic acids, aromatic monocarboxylic acids, or aromatic dicarboxylic acids, and aliphatic monoamines, aliphatic diamines, aromatic monamines, or aromatic diamines, for example.

Examples of the above urea derivatives include, but are not particularly limited to, N-phenylurea, N,N'-diphenylurea, N-phenylthiourea, and N,N'-diphenylthiourea, for example.

Examples of the above triazine derivatives include, but are not particularly limited to, melamine, benzoguanamine, N-phenylmelamine, melem, N,N'-diphenylmelamine, N-methylolmelamine, N,N'-trimethylolmelamine, 2,4-diamidino-6-cyclohexyltriazine, and melam, for example.

The mass ratio of the above nitrogen-containing compound is preferably 0.005 to 0.2 parts by mass, and particularly preferably 0.005 to 0.1 parts by mass with respect to 100 parts by mass of the modified polyacetal mixture. The mass ratio of the above nitrogen-containing compound in the above range is preferable from the viewpoint that the thermal stability of the modified polyacetal mixture is improved when the sinterable inorganic powder and the organic binder are kneaded.

Examples of the above fatty acid metal salt include, but are not particularly limited to, fatty acid metal salts obtained from a saturated or unsaturated fatty acid having a carbon number of 10 to 35 or fatty acid substituted by a hydroxy group, and a hydroxide, oxide or chloride of an alkali metal or an alkaline earth metal, for example. They may be used alone or in a combination of two or more.

Examples of the fatty acids of the above fatty acid metal salts include capric acid, undecylic acid, lauric acid, tridecylic acid, myristic acid, pentadecylic acid, palmitic acid, heptadecylic acid, stearic acid, nonadecanoic acid, arachidic acid, behenic acid, lignoceric acid, cerotic acid, heptacosanoic acid, montanic acid, undecylenic acid, oleic acid, elaidic acid, cetoleic acid, erucic acid, brassidic acid, sorbic acid, linoleic acid, linolenic acid, arachidonic acid, propiolic acid, stearolic acid, 12-hydroxydecanoic acid, 3-hydroxydecanoic acid, 16-hydroxyhexadecanoic acid, 10-hydroxyhexadecanoic acid, 12-hydroxyoctadecanoic acid, and 10-hydroxy-8-octadecanoic acid. Examples of the metal compounds include hydroxides or chlorides of alkali metals such as lithium, sodium, and potassium; alkaline earth metals such as magnesium, calcium, strontium, barium; zinc; or aluminum. Of these, it is preferable that the fatty acid is myristic acid, palmitic acid, or stearic acid and the metal compound is a hydroxide, an oxide, or a chloride of calcium, and calcium myristate, calcium palmitate, or calcium stearate is more preferred.

In cases where the above nitrogen-containing compound and the above fatty acid metal salt are added in the above modified polyacetal mixture, the ratio of the mass of the above fatty acid metal salt to the mass of the above nitrogen-containing compound (mass of the fatty acid metal salt / mass of the nitrogen-containing compound) is preferably within a certain range, and specifically the ratio is 1 to 15, preferably 1 to 10. The ratio of 1 to 15 is preferred because the thermal stability of the modified polyacetal mixture (e.g., modified polyacetal (C)) in the organic binder is improved.

(Backbone resin other than polyacetal)

The above organic binder may further contain a backbone resin other than the polyacetal. As used herein, the backbone resin refers to a thermoplastic resin blended for the purpose of maintaining the strength of a molded body and maintaining the shape of the molded body during degreasing. Examples of the backbone resin other than the above polyacetal include polyolefin resins and nitrogen-containing compounds mentioned above that are resins. The lubricant described below shall not be included in the backbone resin other than the polyacetal.

-Polyolefin resin-

The above organic binder may further contain a polyolefin resin.

The above polyolefin resin is preferably a homopolymer or a copolymer having structural units derived from an

alkene having a carbon number of 2 to 8, preferably a carbon number of 2 to 4.

The melt flow index of the above polyolefin resin measured under the conditions of 230 °C, 2.16 kg is preferably 40 g/10 min or more, more preferably 60 g/10 min or more, from the viewpoint of kneadability with the sinterable inorganic powder and injection moldability.

Specific examples of the above polyolefin resin include polyethylene, polypropylene, ethylene-propylene copolymer, ethylene-vinyl acetate copolymer, ethylene-vinyl alcohol copolymer, polyisoprene, and polybutadiene. Polyethylene, polypropylene, and mixtures thereof are preferred, and polyethylene or polypropylene is more preferred in view of shape retentionability in the degreasing step and prevention of cracking and swelling in the degreasing step. Examples of commercially available products that can be suitably used include SUNTEC HD series, SUNTEC LD series, and SUNTEC EVA series (all manufactured by Asahi Kasei Corporation), and NEO-ZEX, ULTZEX, and Evolue (all manufactured by Prime Polymer Co., Ltd.) as polyethylene; and Sumitomo NOBLEN (manufactured by Sumitomo Chemical Co., Ltd.,), NOVATEC PP (manufactured by Japan Polypropylene Corporation), SunAllomer PM series (manufactured by SunAllomer Ltd.), and Prime Polypro (manufactured by Prime Polymer Co., Ltd.) as polypropylene, for example.

The above polyolefin resin is preferably resistant to degradation by an acid from the viewpoint of shape retentionability of a molded body after acid degreasing. From the viewpoint of the shape retentionability of a molded body after acid degreasing, it is preferable that the weight of the above polyolefin resin after immersed in a 30%-nitric acid aqueous solution under a condition of 23 °C (room temperature), 70 °C for 24 hours according to the method described in JIS K 7114 is preferably 10% or less, more preferably 5% or less, particularly preferably 1% or less of the weight before immersion.

The difference between the thermal decomposition start point (°C) of the above modified polyacetal (C) and the thermal decomposition start point (°C) of the above polyolefin resin is preferably 30 °C or more, more preferably 30 to 100 °C, from the viewpoint of further reducing cracking and swelling during the degreasing step. The above thermal decomposition start point is the temperature measured using a thermogravimetric differential thermal analyzer.

Addition of a polyolefin resin to the organic binder is optional, and the mass ratio of the polyolefin resin may be selected to the extent that it does not affect the shape retentionability of a green molded body or the shape of a molded body after acid degreasing. From the viewpoint of favorably retaining the shape of a green molded body and the shape of a molded body after acid degreasing, the mass ratio of the above polyolefin resin with respect to 100 mass% of the above organic binder is preferably 2 mass% or less, more preferably 1 mass% or less, and particularly preferably 0.5 mass% or less.

(Polyacetal)

The above organic binder may further contain polyacetal.

The above polyacetal includes the unreacted polyacetal resulting from the production of the modified polyacetal (C) described above.

A polyacetal represented by the following formula (3) is an example of the above polyacetal. The above polyacetal may be of one type or of two or more types.

[Chem. 4]

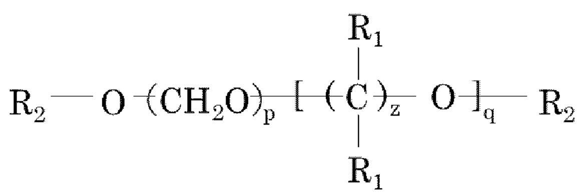

(3)

(In the formula, $R_1$ and $R_2$ are independently selected from the group consisting of hydrogen, an alkyl group, a substituted alkyl group, an aryl group, and a substituted aryl group, p = 95 to 100 mol%, q = 0 to 5 mol%, p + q = 100 mol%, and z is an integer selected from 2 to 6)

(Lubricant)

The above organic binder is preferably further contains a lubricant. The inclusion of the above lubricant further

improves the fluidity of the composition for inorganic powder injection molding, and even molded products with minute structures can be favorably injection molded.

The above lubricant is a compound other than the polyacetal resin and polyolefin resin described above, such as waxes. Examples of the above waxes include paraffin wax, polyethylene wax, polypropylene wax, carbana wax, polyethylene glycol, polytetramethylene ether glycol, polytetraethylene glycol, polyisobutylene, microcrystalline wax, montan-based waxes, beeswax, wood wax, synthetic waxes, poly-1,3-dioxolane, and poly-1,3-dioxepane, for example. Among there, paraffin wax, polyethylene glycol, polytetramethylene ether glycol, and poly-1,3-dioxepane are particularly preferred from the viewpoint of achieving further excellent fluidity of the composition for inorganic powder injection molding during injection molding.

From the viewpoint of achieving further excellent fluidity of the composition for inorganic powder injection molding during injection molding, the mass ratio of the above lubricant is particularly 5 to 60 mass%, more preferably 5 to 50 mass%, and particularly preferably 10 to 50 mass%, with respect to 100% mass of the above organic binder.

The mass ratio of the above organic binder in 100 mass% of the composition for inorganic powder injection molding of the present embodiment is preferably 5 to 30%, more preferably 5 to 20%, and even more preferably 5 to 10%.

<Other additive>

Additives that can be added to the above composition for inorganic powder injection molding other than the above-described ingredients are not limited as long as they do not impair the effects of the present disclosure, and a preferred additive is an antioxidant.

Examples of the above antioxidant include n-octadecyl-3-(3',5'-di-t-butyl-4'-hydroxyphenyl)propionate, n-octadecyl-3-(3'-methyl-5'-t-butyl-4'-hydroxyphenyl)propionate, n-tetradecyl-3-(3',5'-di-t-butyl-4'-hydroxyphenyl)propionate, 1,6-hexanediol bis-(3-(3,5-di-t-butyl-4-hydroxyphenyl)propionate), 1,4-hutanediol bis-(3-(3,5-di-t-butyl-4-hydroxyphenyl)propionate), 3-(3,5-di-t-butyl-4-hydroxyphenyl)propionic acid, triethylene glycol bis-(3-(3-t-butyl-5-methyl-4-hydroxyphenyl)propionate), tetrakis(methylene 3-(3'-t-butyl-4'-hydroxyphenyl)propionate)methane, N,N'-bis-(3-(3,5-di-t-butyl-4-hydroxyphenyl)propionyl)hydrazine, N,N'-tetramethylene bis-3-(3'-methyl-5'-t-butyl-4'-hydroxyphenyl)propionyl diamine, N,N'-bis-3-(3',5'-di-t-butyl-4'-hydroxyphenol)propionyl hexamethylenediamine, 3-(N-salicyloyl)amino-1,2,4-triazole, N,N'-bis-(2-(3-(3,5-di-t-butyl-4-hydroxyphenyl)propionyloxy)ethyl)oxamide, and N,N'-hexamethylene bis-(3,3,5-t-butyl-4-hydroxyphenyl)propanamide, for example. These antioxidants may be used alone or in a combination of two or more.

The content of the antioxidant is 0.01 to 1.0 mass%, preferably 0.05 to 0.5 mass%, with respect to 100 mass% of the modified polyacetal (C). The content within the above range improves thermal stability.

The composition for inorganic powder injection molding of the present embodiment can be produced, for example, by mixing the above inorganic powder, the above organic binder, and the above additives.

The composition for inorganic powder injection molding of the present embodiment can be used as a raw material for a sintered body. The above sintered body may be a sintered body produced by an injection-molding the above composition for inorganic powder injection molding to obtain a injection-molded body including the above composition for inorganic powder injection molding, and degreasing and sintering the above injection-molded body. Examples of the above sintered body include automotive parts, aircraft parts, parts for medical apparatuses, parts for electric and electronic apparatuses, and parts for defense apparatuses.

The disclosure (II) is as follows.

[Disclosure (II)]

[Composition for inorganic powder injection molding]

A composition for inorganic powder injection molding of the present embodiment includes a sinterable inorganic powder and an organic binder containing a modified polyacetal (C) composed of a polyacetal segment (A) and a modification segment (B).

In addition to the above sinterable inorganic powder and the above organic binder, the composition for inorganic powder injection molding of the present embodiment may further contain other additives. The composition may also consist only of the above inorganic powder and the above organic binder.

<Sinterable inorganic powder>

The above inorganic powder can be selected from any known suitable sinterable inorganic powders. It is preferably selected from metal powders, alloy powders, metal carbonyl powders, ceramic powders, and mixtures thereof. Among these, metal powders and ceramic powders are particularly preferred to impart functionality.

One of the above sinterable inorganic powders may be used alone or two or more of these may be used in a combination.

The sinterable inorganic powder may be an inorganic powder having a melting point between 500 °C and 2000 °C and having an average particle diameter of 100 μm or less. Note that the above melting point can be identified from the endothermic peak top by heating under the conditions of 5 °C/min under argon flow using a differential scanning calorimetry apparatus. In addition, the average particle diameter refers to the average diameter at 50% of the cumulative weight distribution measured by a particle size distribution analyzer employing the laser diffraction scattering method. The same meanings of these terms are used below unless otherwise specified.

Specific examples of the above metal powders include powders of aluminum, magnesium, barium, calcium, cobalt, zinc, copper, nickel, iron, silicon, titanium, tungsten, and metal compounds and metal alloys based on these. Here, not only already prepared alloys but also mixtures of individual alloy components can be used.

Examples of the above ceramic powders include oxides such as zinc oxide, aluminum oxide, and zirconia, hydroxides such as hydroxyapatite, carbides such as silicon carbide, nitrides such as silicon nitride and boron nitride, halides such as fluorite, silicates such as stealite, titanates such as barium titanate and lead zirconate titanate, carbonates, phosphates, and ferrites.

The inorganic powders described above may be used alone, or several inorganic materials such as various metal powders, metal powders, and ceramic powders may be used in combination. From the viewpoint of particularly excellent shape retentionability of a green molded body and decomposition control during kneading and injection molding when used with an organic binder containing the modified polyacetal (C), preferred metal and alloy powders include those of titanium alloys and stainless steels such as SUS316L, and ceramic powders such as those of aluminum oxide and zirconia.

The average particle diameter of the above inorganic powder is preferably 30 μm or less, more preferably 20 μm or less.

The mass ratio of the above sinterable inorganic powder is preferably 70 to 95 mass%, more preferably 75 to 95 mass%, and particularly preferably 80 to 95 mass% with respect to 100 mass% of the above composition for inorganic powder injection molding. When the sinterable inorganic powder is within any of the above ranges, it is possible to obtain a composition for use in sintered molded bodies with a melt viscosity suitable for injection molding and a green molded body with high strength.

<Organic binder>

The above organic binder contains a modified polyacetal (C) composed of a polyacetal segment (A) and a modification segment (B). The above organic binder preferably contains a modified polyacetal mixture described below, which includes a modified polyacetal (C). The organic binder may further optionally contain a thermoplastic resin and an additive, and may be a mixture consisting only of a modified polyacetal mixture, a polyolefin resin, and a fluidity imparting agent. The only resin component containing the oxymethylene unit included in the organic binder is preferably the modified polyacetal (C) described below.

(Modified polyacetal mixture)

The above modified polyacetal mixture may contain the modified polyacetal (C) and may further contain a nitrogen-containing compound and a fatty acid metal salt. In particular, it is preferable that the mixture includes the modified polyacetal (C), and the optional ingredients only include the nitrogen-containing compound and the fatty acid metal salt.

-Modified polyacetal (C)-

The above organic binder includes the modified polyacetal (C) in view of kneading with the sinterable inorganic powder and thermal stability in the injection molding step.

In general, a modified polyacetal refers to a block copolymer having a polyacetal segment and a modification segment. The polyacetal segment may be a homopolymer residue consisting only of an oxymethylene unit or a copolymer residue where an oxymethylene unit and an oxyalkylene unit are copolymerized randomly. The modification segment is a component that is not classified into polyacetal segments, and examples thereof include polyolefin, polyurethane, polyester, polyamide, polystyrene, and alkyl polyacrylate.

The modified polyacetal (C) in the present embodiment has a polyacetal segment (A) and a modification segment (B) and may consist only of a polyacetal segment (A) and a modification segment (B). Furthermore, the polyacetal segment (A) is a polyacetal copolymer residue in which an oxymethylene unit and an oxyalkylene unit are randomly copolymerized, as will be described below, and the modification segment (B) is preferably a polyolefin or polyurethane.

One of the above modified polyacetals (C) may be used alone, or two or more of these may be used in combination.

The number average molecular weight of the above modified polyacetal (C) is preferably 10,000 to 500,000 from the viewpoint of obtaining a green molded body with a high yield in the injection molding step, and is preferably 20,000 to 200,000, more preferably 20,000 to 100,000 from the viewpoint of molding of small and thin parts.

The number average molecular weight of the above modified polyacetal (C) can be measured by GPC. Specific conditions of GPC are as follows, for example: Tosoh HLC-8120 GPC system is used as the GPC apparatus, two HFIP806 columns (30 cm columns) manufactured by Showa Denko K. K. as the columns, hexafluoroisopropanol (hereinafter referred to as HFIP) as the carrier, and polymethyl methacrylate (PMMA) manufactured by Polymer Laboratories, Inc. as the standard, and a measurement is carried out under the conditions of temperature 40 °C and a flow rate 0.5 ml/min.

The number average molecular weight of the modification segment (B) constituting the above modified polyacetal (C) is preferably 500 to 10,000 (in terms of polystyrene) from the viewpoint of obtaining a green molded body with a high yield in the injection molding step. From the viewpoint of suppressing the decomposition of the modified polyacetal (C) during kneading with the sinterable inorganic powder, the number average molecular weight (in terms of polystyrene) is more preferable 2,000 to 5,000.

Furthermore, the molecular weight distribution (Mw/Mn) of the modification segment (B) is preferably less than 2.

The number average molecular weight of the modification segment (B) can be measured using GPC. For example, the number average molecular weight can be measured at a temperature of 140 °C using 150C manufactured by Waters as the GPC apparatus, 1,2,4-trichlorobenzene as the carrier, and polystyrene as the standard samples. In cases where the number average molecular weight of the modification segment (B) in a certain modified polyacetal resin produced by a third party needs to be measured, it is desirable to decompose the polyacetal block in advance before measurement.

The ratio of the number average molecular weight (Mn2) of the above modification segment (B) to the number average molecular weight (Mn1) of the above modified polyacetal (C) (Mn2/Mn1 × 100 (%)) is preferably 0.5% or more and 10% or less from the viewpoint of preventing cracking and swelling of a molded body during the degreasing and sintering steps, and is more preferably 0.5% or more to 5.0% or less from the viewpoint of improving the yield in the injection molding step.

Polyolefin and polyurethane are suitably used as the modification segment (B) of the above modified polyacetal (C). Polyolefin is preferred from the viewpoint of reducing residues derived from the organic binder in the degreasing step. Specific examples include polyethylene, polypropylene, ethylene-propylene copolymer, ethylene-vinyl acetate copolymer, ethylene-vinyl alcohol copolymer, polyisoprene, polybutadiene, and hydrogenated polybutadiene. Polyethylene, polypropylene, and hydrogenated polybutadiene are preferred, and hydrogenated polybutadiene is more preferred in view of shape retentionability in the degreasing step and prevention of cracking and swelling in the degreasing step.

The modification segment (B) included in the above modified polyacetal (C) may be of one type or of two or more types. From a viewpoint of ease of production, it is preferably of one type.

The polyacetal segment (A) of the above modified polyacetal (C) is composed of a polyacetal copolymer residue containing an oxymethylene unit (i.e., ($CH_2O$) unit) derived from ring-opening polymerized trioxane, and an oxyalkylene unit represented by the following formula (1) derived from ring-opening polymerized cyclic formal (or cyclic ether) (in this specification, sometimes referred to simply as an "oxyalkylene unit"). The polyacetal segment (A) preferably consists only of the above oxymethylene unit and the above oxyalkylene unit. Furthermore, in the polyacetal segment (A), i.e., the polyacetal copolymer residue, the oxymethylene unit and the oxyalkylene unit are preferably present at random.

[Chem. 5]

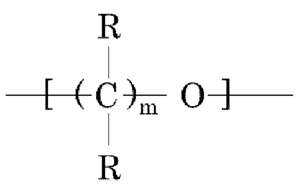

(1)

(In the formula, R is independently selected from hydrogen, an alkyl group, a substituted alkyl group, an aryl group, and a substituted aryl group, and m is an integer selected from 2 to 6.)

The oxyalkylene unit represented by the above formula (1) contained in the above polyacetal segment (A) may

be of one type or of two or more types. From a viewpoint of ease of production, it is preferably of one type.

From the viewpoint of suppressing thermal decomposition of the modified polyacetal (C) in the kneading step with the sinterable inorganic powder, the above polyacetal segment (A) is composed of 95.0 to 99.9 mol% of the oxymethylene unit and 0.1 to 5.0 mol% of the oxyalkylene unit, preferably 98.0 to 99.7 mol% of the oxymethylene unit and 0.3 to 2.0% of the oxyalkylene unit.

The mol% of monomer units constituting the polyacetal segment (A) can be measured by the following method. The modified polyacetal and 1-N hydrochloric acid are charged into a pressure-resistant bottle and heated at 130 °C for 2 hours to hydrolyze the modified polyacetal to obtain an alkylene glycol component derived from cyclic formal (or cyclic ether). Although hydroxyalkylated modification segments are also present after hydrolysis, these hydroxyalkylated modification segments are present in the phase that is separated from the aqueous solution. The alkylene glycol component present in the aqueous solution after hydrolysis is quantified by gas chromatography.

Specific examples of the oxyalkylene unit represented by the above formula (1) derived from cyclic formal (or cyclic ether) includes an ethylene oxide residue, a propylene oxide residue, a 1,3-dioxolane residue, a 1,3,5-trioxepane residue, a diethylene glycol formal residue, a 1,4-butanediol formal residue, and a 1,3-dioxane residue. Among them, in view of the formation rate of the modified polyacetal (C), the oxyalkylene unit is preferably a 1,3-dioxolane residue, a 1,3,5-trioxepane residue, or a 1,4-butanediol formal residue, and more preferably a 1,3-dioxolane residue.

In particular, it is preferable that the oxyalkylene unit is a 1,3-dioxolane residue obtained by polymerizing 1,3-dioxolane that contains 500 mass ppm or less of 2-methyl-1,3-dioxolane and 15 mass ppm or less in terms of hydrogen peroxide of peroxides, and it is preferable that 10 to 500 mass ppm of one or more hindered phenols is added during the polymerization.

Note that the content of 2-methyl-1,3-dioxolane can be measured using a hydrogen flame ionization detector in a gas chromatography equipped with gas chromatograph pack 55 manufactured by GL Sciences Inc. Specifically, the content of peroxide in 1,3-dioxolane is determined using the following procedure. To a flask, 40 ml of isopropyl alcohol, 10 ml of a saturated solution of sodium iodide (where NaI is dissolved in isopropyl alcohol), 2 ml of acetic acid, and 25 g of 1,3-dioxolane are charged. The mixture is refluxed at 100 °C for about 5 minutes. Immediately thereafter, it is titrated with 0.01-N sodium thiosulfate until the color of the mixture in the flask changes from yellow to colorless. The titration volume is recorded (titration volume is denoted as A ml). For blank titration, the same procedure is repeated without using 1,3-dioxolane (titration volume is denoted as B ml). The content of peroxide is calculated by the following formula.

$$\text{Amount of peroxide (in terms of hydrogen peroxide, ppm)} = (A - B) \times 17 \times 0.01 / (25 \times 1000) \times 106$$

The above modified polyacetal (C) is preferably a block copolymer represented by polyacetal segment (A) - modification segment (B) - polyacetal segment (A) (denoted as (A)-(B)-(A) or ABA, etc., in this specification) or modification segment (B) - polyacetal segment (A) - modification segment (B) (denoted as (B)-(A)-(B) or BAB, etc., in this specification), from the viewpoint of inhibition of the decomposition of the modified polyacetal (C) during the kneading step with the sinterable inorganic powder. Furthermore, from the viewpoint of imparting strength to a green molded body, it is more preferably (A)-(B)-(A).

Note that whether a particular polyacetal resin is a block copolymer or not can be identified using known methods. For example, a method that can be used involves quantitative comparison of the amount of formaldehyde generated when the resin is decomposed using a polyacetal resin having a known structure as the reference sample.

Since the above modified polyacetal (C) remains resistant to decomposition even when being subjected to steps where heat is applied, such as kneading with a sinterable inorganic powder and injection molding, a desired composition for inorganic powder injection molding and injection-molded body can be obtained. When the weight average molecular weight of the modified polyacetal (C) in the composition for inorganic powder injection molding is denoted as Mw1 and the weight average molecular weight of a modified polyacetal extracted from the composition for inorganic powder injection molding in chloroform under the condition of 80 °C for 8 hours is denoted as Mw2, the polyacetal molecular weight reduction ratio expressed by the following formula is preferably 40% or less from the viewpoint of maintaining good injection moldability, more preferably 20% from the viewpoint of maintaining the strength of a molded body, and even more preferably 10% from the viewpoint of reducing odor in the workplace.

$$\text{Polyacetal molecular weight reduction ratio (\%)} = (1 - Mw2 / Mw1) \times 100$$

The conditions for extraction may be the conditions described in "1. Evaluation of thermal stability of polyacetal" in the Examples below.

The mass ratio of the above modified polyacetal (C) in 100 mass% of the above modified polyacetal mixture

is preferably 95 mass% or more, more preferably 97 mass% or more and less than 100 mass%, and even more preferably 97 to 99.9 mass%.

The mass ratio of the above modified polyacetal (C) in 100 mass% of the above organic binder is preferably 1 to 40 mass%, more preferably 1 to 20%, and particularly preferably 1 to 10%, from the viewpoint of reducing decomposed products of the above polyacetal in the kneading and injection molding steps.

The mass ratio of the above modified polyacetal (C) in 100 mass% of the above composition for inorganic powder injection molding is preferably 1 to 20%, more preferably 2 to 15 mass%, and even more preferably 4 to 10%, from the viewpoint of achieving excellent shape retentionability of a green molded body containing the inorganic powder.

The ratio of the mass of the above inorganic powder to the mass of the above modified polyacetal (C) (the mass of the inorganic powder / the mass of the modified polyacetal (C)) in the above composition for inorganic powder injection molding is preferably 5 to 200, more preferably 10 to 100, and even more preferably 15 to 50 in view of the shape retentionability of a green molded body and prevention of cracking and swelling of a molded body in the degreasing and sintering steps.

The method of producing the above modified polyacetal (C) is not particularly limited and can be obtained by any known method.

Depending on the production method of the above modified polyacetal (C), an unreacted polyacetal resin and/or an unreacted polyolefin-based polymer may coexist with the modified polyacetal that is the reaction product, and a mixture where the ingredients are substantially soluble to each other or uniformly dispersed may be produced. The unreacted polyacetal resin and unreacted polyolefin-based polymer resulting from the method of producing the modified polyacetal (C) may be the thermoplastic resin described above, which is one of the ingredients in the composition for inorganic powder injection molding.

-Nitrogen-containing compound and fatty acid metal salt-

It is preferred that the above modified polyacetal mixture further contains a nitrogen-containing compound and/or a fatty acid metal salt, and it is more preferred that it contains a nitrogen-containing compound and a fatty acid metal salt.

The inclusion of the above nitrogen-containing compound and the above fatty acid metal salt provides excellent extrudability, thermal stability, and suppression on foreign matters upon production of the modified polyacetal mixture. In addition, the fluidity of the composition for inorganic powder injection molding where the metal powder is mixed and the strength of a green molded body tend to be improved at the same time. The inclusion of the above nitrogen-containing compound and the above fatty acid metal salt improves the thermal stability of the composition for inorganic powder injection molding.

Examples of the above nitrogen-containing compound include, but are not particularly limited to, polyamide resins, amide compounds, urea derivatives, and triazine derivatives. Among these, polyamide resins are preferred from the viewpoint of achieving further excellent thermal stability of the composition for inorganic powder injection molding and further excellent strength of a green molded body. They may be used alone or in a combination of two or more.

Examples of the above polyamide resins include, but are not particularly limited to, nylon 6, nylon 11, nylon 12, nylon 66, nylon 6.10, nylon 6/6.10, nylon 6/6.6, nylon 6.6/6.10, nylon 6/6.6/6.10, and poly-$\alpha$-alanine, for example.

Examples of the above amide compounds include, but are not particularly limited to, stearyl stearate amide, stearyl oleate amide, stearyl erucate amide, ethylenediamine-distearate amide, ethylenediamine-dibehenate amide, hexamethylenediamine-distearate amide, ethylenediamine-dierucate amide, xylylenediamine-dierucate amide, di(xylylenediamine-distearate amide), and sebacic acid amide, which are produced from aliphatic monocarboxylic acids, aliphatic dicarboxylic acids, aromatic monocarboxylic acids, or aromatic dicarboxylic acids, and aliphatic monoamines, aliphatic diamines, aromatic monamines, or aromatic diamines, for example.

Examples of the above urea derivatives include, but are not particularly limited to, N-phenylurea, N,N'-diphenylurea, N-phenylthiourea, and N,N'-diphenylthiourea, for example.

Examples of the above triazine derivatives include, but are not particularly limited to, melamine, benzoguanamine, N-phenylmelamine, melem, N,N'-diphenylmelamine, N-methylolmelamine, N,N'-trimethylolmelamine, 2,4-diamidino-6-cyclohexyltriazine, and melam, for example.

The mass ratio of the above nitrogen-containing compound is preferably 0.005 to 0.2 parts by mass, and particularly preferably 0.005 to 0.1 parts by mass with respect to 100 parts by mass of the modified polyacetal mixture. The mass ratio of the above nitrogen-containing compound in the above range is preferable from the viewpoint that the thermal stability of the modified polyacetal mixture is improved when the sinterable inorganic powder and the organic binder are kneaded.

Examples of the above fatty acid metal salt include, but are not particularly limited to, fatty acid metal salts obtained from a saturated or unsaturated fatty acid having a carbon number of 10 to 35 or fatty acid substituted by a hydroxy group, and a hydroxide, oxide or chloride of an alkali metal or an alkaline earth metal, for example. They may

be used alone or in a combination of two or more.

Examples of the fatty acids of the above fatty acid metal salts include capric acid, undecylic acid, lauric acid, tridecylic acid, myristic acid, pentadecylic acid, palmitic acid, heptadecylic acid, stearic acid, nonadecanoic acid, arachidic acid, behenic acid, lignoceric acid, cerotic acid, heptacosanoic acid, montanic acid, undecylenic acid, oleic acid, elaidic acid, cetoleic acid, erucic acid, brassidic acid, sorbic acid, linoleic acid, linolenic acid, arachidonic acid, propiolic acid, stearolic acid, 12-hydroxydecanoic acid, 3-hydroxydecanoic acid, 16-hydroxyhexadecanoic acid, 10-hydroxyhexadecanoic acid, 12-hydroxyoctadecanoic acid, and 10-hydroxy-8-octadecanoic acid. Examples of the metal compounds include hydroxides or chlorides of alkali metals such as lithium, sodium, and potassium; alkaline earth metals such as magnesium, calcium, strontium, barium; zinc; or aluminum. Of these, it is preferable that the fatty acid is myristic acid, palmitic acid, or stearic acid and the metal compound is a hydroxide, an oxide, or a chloride of calcium, and calcium myristate, calcium palmitate, or calcium stearate is more preferred.

In cases where the above nitrogen-containing compound and the above fatty acid metal salt are added in the above modified polyacetal mixture, the ratio of the mass of the above fatty acid metal salt to the mass of the above nitrogen-containing compound (mass of the fatty acid metal salt / mass of the nitrogen-containing compound) is preferably within a certain range, and specifically the ratio is 1 to 15, preferably 1 to 10. The ratio of 1 to 15 is preferred because the thermal stability of the modified polyacetal mixture (e.g., modified polyacetal (C)) in the organic binder is improved.

(Thermoplastic resin)

The above organic binder may further contain a thermoplastic resin. Examples of the above thermoplastic resin include a polyacetal resin and a polyolefin resin

-Polyolefin resin-

The above organic binder may further contain a polyolefin resin.

The above polyolefin resin is preferably a homopolymer or a copolymer having structural units derived from an alkene having a carbon number of 2 to 8, preferably a carbon number of 2 to 4.

The melt flow index of the above polyolefin resin measured under the conditions of 230 °C, 2.16 kg is preferably 40 g/10 min or more, more preferably 60 g/10 min or more, from the viewpoint of kneadability with the sinterable inorganic powder and injection moldability.

Specific examples of the above polyolefin resin include polyethylene, polypropylene, ethylene-propylene copolymer, ethylene-vinyl acetate copolymer, ethylene-vinyl alcohol copolymer, polyisoprene, and polybutadiene. Polyethylene, polypropylene, and mixtures thereof are preferred, and polyethylene or polypropylene is more preferred in view of shape retentionability in the degreasing step and prevention of cracking and swelling in the degreasing step. Examples of commercially available products that can be suitably used include SUNTEC HD series, SUNTEC LD series, and SUNTEC EVA series (all manufactured by Asahi Kasei Corporation), and NEO-ZEX, ULTZEX, and Evolue (all manufactured by Prime Polymer Co., Ltd.) as polyethylene; and Sumitomo NOBLEN (manufactured by Sumitomo Chemical Co., Ltd.,), NOVATEC PP (manufactured by Japan Polypropylene Corporation), SunAllomer PM series (manufactured by SunAllomer Ltd.), and Prime Polypro (manufactured by Prime Polymer Co., Ltd.) as polypropylene, for example.

The above polyolefin resin is preferably resistant to degradation by an acid from the viewpoint of shape retentionability of a molded body after acid degreasing. From the viewpoint of the shape retentionability of a molded body after acid degreasing, it is preferable that the weight of the above polyolefin resin after immersed in a 30%-nitric acid aqueous solution under a condition of 23 °C (room temperature), 70 °C for 24 hours according to the method described in JIS K 7114 is preferably 10% or less, more preferably 5% or less, particularly preferably 1% or less of the weight before immersion.

The difference between the thermal decomposition start point (°C) of the above modified polyacetal (C) and the thermal decomposition start point (°C) of the above polyolefin resin is preferably 30 °C or more, more preferably 30 to 100 °C, from the viewpoint of further reducing cracking and swelling during the degreasing step. The above thermal decomposition start point is the temperature measured using a thermogravimetric differential thermal analyzer.

From the viewpoint of favorably retaining the shape of a green molded body and the shape of a molded body after acid degreasing, the mass ratio of the above polyolefin resin with respect to 100 mass% of the above organic binder is preferably 5 to 95 mass%, more preferably 5 to 70 mass%, and particularly preferably 5 to 60 mass%.

The mass ratio of the above polyolefin resin with respect to 100 mass% of the above polyacetal resin is preferably 1 to 200 mass%, more preferably 5 to 150 mass%, and even more preferably 10 to 120 mass%.

The ratio of the total mass of the above polyacetal resin and the above polyolefin resin in 100 mass% of the above organic binder is preferably 45 mass% or more, more preferably 90 mass% or more.

In addition, the ratio of the total mass of the above polyacetal resin, the above polyolefin resin, and a fluidity imparting agent to be described later in 100 mass% of the above organic binder is preferably 90 mass% or more, more

preferably 95 mass% or more, and even more preferably 98 mass% or more.

-Polyacetal

The above polyacetal includes the unreacted polyacetal resulting from the production of the modified polyacetal (C) described above.

A polyacetal represented by the following formula (3) is an example of the above polyacetal. The above polyacetal may be of one type or of two or more types.

[Chem. 6]

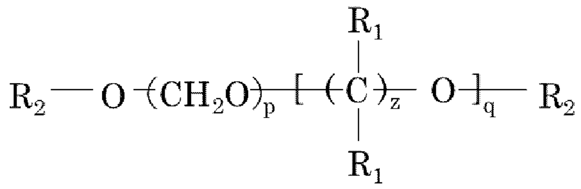

(3)

(In the formula, $R_1$ and $R_2$ are independently selected from the group consisting of hydrogen, an alkyl group, a substituted alkyl group, an aryl group, and a substituted aryl group, p = 95 to 100 mol%, q = 0 to 5 mol%, p + q = 100 mol%, and z is an integer selected from 2 to 6)

(Fluidity imparting agent)

The above organic binders preferably further contains a fluidity imparting agent. The inclusion of the above fluidity imparting agent further improves the fluidity of the composition for inorganic powder injection molding, and even molded products with minute structures can be favorably injection molded.

The above fluidity imparting agent is a compound other than the polyacetal resin and polyolefin resin described above, such as waxes. Examples of the above waxes include paraffin wax, polyethylene wax, polypropylene wax, carbana wax, polyethylene glycol, polytetramethylene ether glycol, polytetraethylene glycol, polyisobutylene, microcrystalline wax, montan-based waxes, beeswax, wood wax, synthetic waxes, poly-1,3-dioxolane, and poly-1,3-dioxepane, for example. Among there, paraffin wax, polyethylene glycol, polytetramethylene ether glycol, and poly-1,3-dioxepane are particularly preferred from the viewpoint of achieving further excellent fluidity of the composition for inorganic powder injection molding during injection molding.

From the viewpoint of achieving further excellent fluidity of the composition for inorganic powder injection molding during injection molding, the mass ratio of the above fluidity imparting agent is particularly 5 to 60 mass%, more preferably 5 to 50 mass%, and particularly preferably 10 to 50 mass%, with respect to 100% mass of the above organic binder.

The mass ratio of the above organic binder in 100 mass% of the composition for inorganic powder injection molding of the present embodiment is preferably 5 to 30%, more preferably 5 to 20%, and even more preferably 5 to 10%.

<Other additive>

Additives that can be added to the above composition for inorganic powder injection molding other than the above-described ingredients are not limited as long as they do not impair the effects of the present disclosure, and a preferred additive is an antioxidant.

Examples of the above antioxidant include n-octadecyl-3-(3',5'-di-t-butyl-4'-hydroxyphenyl)propionate, n-octadecyl-3-(3'-methyl-5'-t-butyl-4'-hydroxyphenyl)propionate, n-tetradecyl-3-(3',5'-di-t-butyl-4'-hydroxyphenyl)propionate, 1,6-hexanediol bis-(3-(3,5-di-t-butyl-4-hydroxyphenyl)propionate), 1,4-hutanediol bis-(3-(3,5-di-t-butyl-4-hydroxyphenyl)propionate), 3-(3,5-di-t-butyl-4-hydroxyphenyl)propionic acid, triethylene glycol bis-(3-(3-t-butyl-5-methyl-4-hydroxyphenyl)propionate), tetrakis(methylene 3-(3'-t-butyl-4'-hydroxyphenyl)propionate)methane, N,N'-bis-(3-(3,5-di-t-butyl-4-hydroxyphenyl)propionyl)hydrazine, N,N'-tetramethylene bis-3-(3'-methyl-5'-t-butyl-4'-hydroxyphenyl)propionyl diamine, N,N'-bis-3-(3',5'-di-t-butyl-4'-hydroxyphenol)propionyl hexamethylenediamine, 3-(N-salicyloyl)amino-1,2,4-triazole, N,N'-bis-(2-(3-(3,5-di-t-butyl-4-hydroxyphenyl)propionyloxy)ethyl)oxamide, and N,N'-hexamethylene bis-(3,3,5-t-butyl-4-hydroxyphenyl)propanamide, for example. These antioxidants may be used alone or in a combination of two or more.

The content of the antioxidant is 0.01 to 1.0 mass%, preferably 0.05 to 0.5 mass%, with respect to 100 mass% of the modified polyacetal (C). The content within the above range improves thermal stability.

The polyacetal molecular weight reduction ratio of the weight average molecular weight of a modified polyacetal extracted from the above composition for inorganic powder injection molding in chloroform under the condition of 80 °C for 8 hours to the weight average molecular weight of the above modified polyacetal (C) is 40% or less, preferably 5 to 36%, and more preferably 7 to 26%. The above polyacetal molecular weight reduction ratio can be measured by using the method described in the Examples section below.

The composition for inorganic powder injection molding of the present embodiment can be produced by mixing the above inorganic powder, the above organic binder, and the above additives.

The composition for inorganic powder injection molding of the present embodiment can be used as a raw material for a sintered body. The above sintered body may be a sintered body produced by an injection-molding the above composition for inorganic powder injection molding to obtain a injection-molded body including the above composition for inorganic powder injection molding, and degreasing and sintering the above injection-molded body. Examples of the above sintered body include automotive parts, aircraft parts, parts for medical apparatuses, parts for electric and electronic apparatuses, and parts for defense apparatuses.

## EXAMPLES

The following provides a more detailed description of the present disclosure through specific examples and comparative examples. However, the present disclosure is not limited to the following examples.

### [Example of Disclosure (I)]

The terminology and measurement methods of the properties in the examples and comparative examples are as follows.

### [Production of modified polyacetal (C)]

A hydrogenated polybutadiene 1 represented by the formulae (4) and (5) in which both ends were hydroxyalkylated, a hydrogenated polybutadiene 2, and a hydrogenated polybutadiene 3 represented by the formula (6) in which one end was hydroxyalkylated were used as chain transfer agents. Polymerization was carried out using the method described in JP 4560261 B to obtain a modified polyacetals I-1 to I-13, where the polyacetal segments were composed of an oxymethylene unit and an oxyethylene unit. For comparison, the unmodified polyacetal I-1 using methanol as a chain transfer agent was also polymerized. The number average molecular weights (Mn1) of the resulting modified and unmodified polyacetal (C), the number average molecular weight (Mn2) of the modification segment, the molar ratio of oxyethylene unit in the polyacetal segment (A), and the melt flow rate (MFR) of the modified polyacetal (C) are summarized in Table 1.

[Chem. 7]

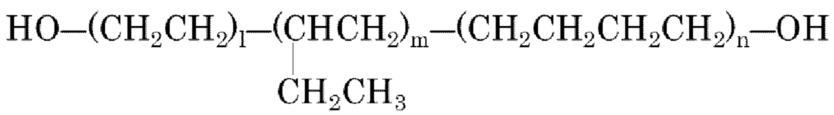

... Formula (4)

(In the formula, l, m, and n are each integers from 1 to 50.)

[Chem. 8]

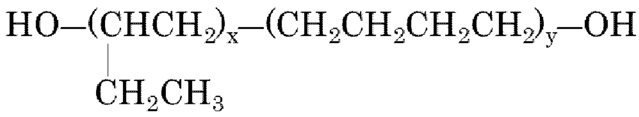

... Formula (5)

(In the formula, x and y are integers from 1 to 50.)

[Chem. 9]

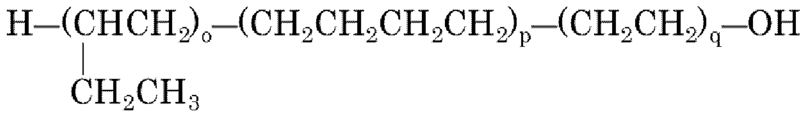

... Formula (6)

(In the formula, o, p, and q are each integers from 1 to 50.)

Note that melt flow rate was measured under the conditions of at 190 °C, 2.16 kg in accordance with ASTM-D-1238-57T.

[Production of polyacetal composition]

To 100 parts by mass of the above modified polyacetal (C), 0.05 parts by mass of nylon 66 and 0.3 parts by mass of the calcium stearate were uniformly added and mixed, which was fed to a twin screw extruder provided with a vent (L/D = 40) set to 200 °C and was pelletized while degassing under reduced pressure at 90 kPa. Then, the resultant was dried at 100 °C for 2 hours to obtain modified polyacetal mixtures I-1 to I-13.

In addition, the additives were blended in the same manner, except that 100 parts by mass of an unmodified polyacetal were used instead of the modified polyacetal, to produce an unmodified polyacetal mixture.

[Production of composition for sinterable inorganic powder injection molding]

1) Production of composition for sinterable inorganic powder injection molding for acid degreasing

The above modified polyacetal mixtures I-1 to I-13, polytetramethylene ether glycol (PTMG 3000, manufactured by Mitsubishi Chemical Corporation) as a lubricant, and SUS316L (DAP316L, manufactured by Daido Steel Co., Ltd.) as a sinterable inorganic powder were blended in the mass ratios listed in Table 2 in an MS-type pressure kneader (Model DS3-10, manufactured by Nihon Spindle Manufacturing Co., Ltd.) heated to 170 °C, and kneaded for 30 minutes.

The resulting kneaded product was fed into a Willey-type pulverizer (manufactured by Yoshida Seisakusho Co., Ltd.) and pulverized to obtain compositions for sinterable inorganic powder injection molding 1-1 to 1-13 for acid degreasing.

Furthermore, the unmodified polyacetal mixture I-1 that was used instead of the modified polyacetal mixture, a low density polyethylene (SUNTEC TM LDPE M6555, manufactured by Asahi Kasei Corporation), polytetramethylene ether glycol, and SUS316L were blended in the ratios listed in Table 2 and kneaded for 30 minutes.

The resulting kneaded product was fed into a Willey-type pulverizer (manufactured by Yoshida Seisakusho Co., Ltd.) and pulverized to obtain a composition for sinterable inorganic powder injection molding for acid degreasing.

2) Production of composition for sinterable inorganic powder injection molding for thermal degreasing

The above modified polyacetal mixtures I-1 to I-13, paraffin wax (Paraffin wax-145, manufactured by NIPPON SEIRO CO., LTD.) as a lubricant, and SUS316L (DAP316L, manufactured by Daido Steel Co., Ltd.) as a sinterable inorganic powder were blended in the ratios listed in Table 3 in a MS-type pressure kneader (Model DS3-10, manufactured by Nihon Spindle Manufacturing Co., Ltd.), and kneaded for 30 minutes.

The resulting kneaded product was fed into a Willey-type pulverizer (manufactured by Yoshida Seisakusho

Co., Ltd.) and pulverized to obtain a composition for sinterable inorganic powder injection molding for thermal degreasing.

Furthermore, the unmodified polyacetal mixture I-1 that was used instead of the modified polyacetal mixture, polypropylene (Sumitomo NOBLEN U501E1, manufactured by Sumitomo Chemical Co., Ltd.) having an MFR of 120 g/10 min under the conditions of 230 °C, 2.16 kg, paraffin wax, and SUS316L were blended in the ratios listed in Table 3 and kneaded for 30 minutes to obtain a composition for sinterable inorganic powder injection molding for thermal degreasing.

[Evaluations]

1. Injection moldability

A green molded specimen in a dumbbell shape in accordance with ISO 10724-1 was molded at 175 to 200 °C using an injection molding machine (ROBOSHOT $\alpha$-50iA manufactured by FANUC CORPORATION). The molded body was visually observed to check whether there was any deformation and evaluated as good if no deformation was observed, poor if deformation was observed, or not moldable if injection molding could not be performed. The results are summarized in Tables 2 to 3.

2. Shape retentionability of degreased molded body

2-1: Shape retentionability after acid degreasing

In Examples I-1 to I-7 and Comparative Examples I-1 to I-8, acid degreasing was performed.

The above molded bodies were set in a degreasing furnace while being supported at two points with an interval of 50 mm. The above furnace was first heated to 110 °C and the inside was replaced with nitrogen gas at 500 l/h for 30 minutes. Then, 98% nitric acid was supplied at 30 ml/h while the nitrogen purge was kept. Degreasing was carried out. The conditions were as follows: nitric acid was kept to be fed for 2.5 hours; subsequently, the inside of the furnace was replaced with 500 l/h of nitrogen gas for 45 minutes, and temperature was reduced to room temperature.

The appearance of the resulting degreased molded body was visually observed, and evaluated as good if there was no distortion or damage, or poor if there was distortion or damage. If injection molding could not be performed, the result was evaluated as "not performed". Results are summarized in Table 2.

2-2: Shape retentionability after thermal degreasing

In Examples I-8 to I-14 and Comparative Examples I-9 to I-16, thermal degreasing was performed.

The above molded bodies were set in a degreasing furnace while being supported at two points with an interval of 50 mm. Then, degreasing was carried out by purging the inside of the degreasing furnace with nitrogen gas, raising the temperature to 500 °C at a rate of 30 °C/hr as the first condition or 45 °C/hr as the second condition, and maintaining the temperature to 500 °C for 2 hours. The appearance of the resulting degreased molded body was visually observed, and evaluated as good if there was no distortion or damage, or poor if there was distortion or damage. If injection molding could not be performed, the result was evaluated as "not performed". Results are summarized in Table 3.

3: Observation of shape of sintered body

In Examples I-1 to I-14 and Comparative Examples I-1 to I-16, sintering was performed after degreasing under each condition.

The degreased molded body was transferred to a sintering furnace, and after the inside of the furnace was replaced with argon gas, the temperature was increased from room temperature to 600 °C at 5 °C/min. After the temperature was held at 600 °C for 1 hour, the temperature was raised to 1350 °C under a reduced pressure of 1 to 5 Torr at 5 °C/min and held for 1 hour to perform sintering, followed by cooling to room temperature.

The shape of the sintered body was visually observed, and evaluated as good if no cracks or swelling was observed, or as poor when if cracks or swelling were observed. If injection molding could not be performed, the result was evaluated as "not performed". The results are summarized in Tables 2 to 3.

4: Density measurement

Samples without cracks or swelling in the visual observation were allowed to stand under the conditions of room temperature of 23 °C and a humidity of 50% RH for 24 hours and then weighed. The samples were then immersed in water for 24 hours and weighed in water. The samples were then taken out of the water and weighed after water was wiped off. The density was calculated using these weights, and the ratio (%) to the density of SUS316L used (7.8 g/$cm^3$)

was calculated. The results are summarized in Tables 2 to 3.

[Table 1]

| Polyacetal species | Polyacetal segment (A) | Modification segment (B) | Polymer structure | Modified polyacetal Mn1 | Modification segment Mn2 | Ratio of oxyethylene (mol%) | MFR (g/10min) |
|---|---|---|---|---|---|---|---|
| Modified polyacetal I-1 | Polyacetal copolymer | Hydrogenated polybutadiene-1 | ABA | 20000 | 2390 | 1.4 | 120 |
| Modified polyacetal I-2 | Polyacetal copolymer | Hydrogenated polybutadiene-1 | ABA | 50000 | 2390 | 1.4 | 90 |
| Modified polyacetal I-3 | Polyacetal copolymer | Hydrogenated polybutadiene-1 | ABA | 20000 | 1376 | 1.4 | 131 |
| Modified polyacetal I-4 | Polyacetal copolymer | Hydrogenated polybutadiene-1 | ABA | 20000 | 9384 | 1.4 | 113 |
| Modified polyacetal I-5 | Polyacetal copolymer | Hydrogenated polybutadiene-1 | ABA | 20000 | 2390 | 4.5 | 137 |
| Modified polyacetal I-6 | Polyacetal copolymer | Hydrogenated polybutadiene-2 | ABA | 20000 | 2390 | 1.4 | 126 |
| Modified polyacetal I-7 | Polyacetal copolymer | Hydrogenated polybutadiene-3 | BAB | 20000 | 2390 | 1.4 | 125 |
| Modified polyacetal I-8 | Polyacetal copolymer | Hydrogenated polybutadiene-1 | ABA | 20000 | 2390 | 0.01 | 163 |
| Modified polyacetal I-9 | Polyacetal copolymer | Hydrogenated polybutadiene-1 | ABA | 20000 | 2390 | 7.5 | 170 |
| Modified polyacetal I-10 | Polyacetal copolymer | Hydrogenated polybutadiene-1 | ABA | 20000 | 20000 | 1.4 | 67 |
| Modified polyacetal I-11 | Polyacetal copolymer | Hydrogenated polybutadiene-1 | ABA | 20000 | 230 | 1.4 | 145 |
| Modified polyacetal I-12 | Polyacetal copolymer | Hydrogenated polybutadiene-1 | ABA | 5500 | 2390 | 1.4 | 213 |
| Modified polyacetal I-13 | Polyacetal copolymer | Hydrogenated polybutadiene-1 | ABA | 70000 | 2390 | 1.4 | 56 |
| Unmodified polyacetal I-1 | Polyacetal copolymer | - | - | 20000 | - | 1.4 | 150 |

[Table 2]

| | | | Examples | | | | | | | Comparative Example | | | | | | | |
|---|---|---|---|---|---|---|---|---|---|---|---|---|---|---|---|---|---|
| | | | I-1 | I-2 | I-3 | I-4 | I-5 | I-6 | I-7 | I-1 | I-2 | I-3 | I-4 | I-5 | I-6 | I-7 | I-8 |
| Type of modified polyacetal mixture | | - | 1 | 2 | 3 | 4 | 5 | 6 | 7 | - | 8 | 9 | 10 | 11 | 12 | 13 | - |
| Type of unmodified polyacetal mixture | | - | - | - | - | - | - | - | - | 1 | - | - | - | - | - | - | 1 |
| SUS316L | | mass% | 92 | 90 | 92 | 90 | 93 | 92 | 93 | 92 | 92 | 93 | 87 | 92 | 93 | 87 | 92 |
| Polyacetal mixture | | mass% | 7 | 7.5 | 7 | 8 | 6 | 7 | 6 | 7 | 7 | 6 | 10 | 7 | 6 | 10 | 6 |
| Low-density polyethylene | | mass% | 0 | 0 | 0 | 0 | 0 | 0 | 0 | 0 | 0 | 0 | 0 | 0 | 0 | 0 | 1 |
| PTMG | | mass% | 1 | 2.5 | 1 | 2 | 1 | 1 | 1 | 1 | 1 | 1 | 3 | 1 | 1 | 3 | 1 |
| Evaluation | Kneading tim e | - | 30 min | 30 min | 30 min | 30 min | 30 min | 30 min | 30 min | 30 min | 30 min | 30 min | 30 min | 30 min | 30 min | 30 min | 30 min |
| | Injection moldability | - | Good | Good | Good | Good | Good | Good | Good | Not moldable | Not moldable | Poor | Poor | Good | Poor | Not moldable | Good |
| | Shape retentionability after heat after acid degreasing | - | Good | Good | Good | Good | Good | Good | Good | Not performed | Not performed | Not performed | Poor | Poor | Not performed | Not performed | Poor |
| | Cracking and swelling after sintering | - | Good | Good | Good | Good | Good | Good | Good | Not performed | Not performed | Not performed | Poor | Poor | Not performed | Not performed | Poor |
| | Ratio to standard density | % | 98 | 94 | 95 | 93 | 96 | 98 | 97 | - | - | - | - | - | - | - | - |

Mixing time: All 30 min. When high-viscosity POM was used, it could not be kneaded in 30 min, and injection molding failure, cracking and swelling in degreasing and sintering occurred due to poor dispersion.
Injection moldability: Deformation when protruded with a protruding pin
Form retention after degreasing: The shape of the molded body after degreasing is visually observed. Presence or absence of distortion or damage

[Table 3]

| | | | Examples | | | | | | | Comparative Example | | | | | | | |
|---|---|---|---|---|---|---|---|---|---|---|---|---|---|---|---|---|---|
| | | | I-8 | I-9 | I-10 | I-11 | I-12 | I-13 | I-14 | I-9 | I-10 | I-11 | I-12 | I-13 | I-14 | I-15 | I-16 |
| Type of modified polyacetal mixture | | - | 1 | 2 | 3 | 4 | 5 | 6 | 7 | - | 8 | 9 | 10 | 11 | 12 | 13 | - |
| Type of unm odified polyacetal mixtur | | - | - | - | - | - | - | - | - | 1 | - | - | - | - | - | - | 1 |
| SUS316L | | mass% | 92 | 90 | 92 | 90 | 93 | 92 | 93 | 92 | 92 | 93 | 87 | 92 | 93 | 87 | 92 |
| Polyacetal mixture | | mass% | 4 | 5 | 4 | 5 | 4 | 4 | 4 | 4 | 4 | 4 | 7 | 4 | 4 | 6 | 2 |
| Polypropylene | | mass% | 0 | 0 | 0 | 0 | 0 | 0 | 0 | 0 | 0 | 0 | 0 | 0 | 0 | 0 | 2 |
| Paraffin wax | | mass% | 4 | 5 | 4 | 5 | 3 | 4 | 3 | 4 | 4 | 3 | 6 | 4 | 3 | 7 | 4 |
| Evaluation | Kneading time | - | 30 min | 30 min | 30 min | 30 min | 30 min | 30 min | 30 min | 30 min | 30 min | 30 min | 30 min | 30 min | 30 min | 30 min | 30 min |
| | Injection moldability | - | Good | Good | Good | Good | Good | Good | Good | Not moldable | Not moldable | Poor | Good | Not moldable | Poor | Good | Good |
| | Shape retentionability after heat degreasing | - | Good | Good | Good | Good | Good | Good | Good | Not performed | Not performed | Not performed | Good | Not performed | Not performed | Poor | Poor |
| | Cracking and swelling after sintering | - | Good | Good | Good | Good | Good | Good | Good | Not performed | Not performed | Not performed | Poor | Not performed | Not performed | Poor | Poor |
| | Ratio to standard density | % | 98 | 93 | 95 | 94 | 96 | 98 | 98 | - | - | - | - | - | - | - | - |

Mixing time: All 30 min. When high-viscosity POM was used, it could not be kneaded in 30 mm, and injection molding failure, cracking and swelling in degreasing and sintering occurred due to poor dispersion.
Injection moldability: Deformation when protruded with a protruding pin
Form retention after degreasing: The shape of the molded body after degreasing is visually observed. Presence or absence of distortion or damage

[Example of Disclosure (II)]

The terminology and measurement methods of the properties in the examples and comparative examples are as follows.

[Production of modified polyacetal II-1]

A jacketed twin-shaft paddle type continuous polymerization reactor capable of allowing a heat medium to pass through was adjusted to 80 °C and polymerization was caused to take place by continuously feeding the following raw materials (1) to (3) and a catalyst (4).

(1) Trioxane: 133 mol/hour
(2) 1,3-dioxolane: 3.5 mol/hour
(3) A hydrogenated polybutadiene represented by the following formula (4) of which the both end were hydroxylated and which had a number average molecular weight of 2390: 0.1 mol/hour

[Chem. 10]

$$HO-(CH_2CH_2)_l-(\underset{\displaystyle CH_2CH_3}{\underset{|}{C}}HCH_2)_m-(CH_2CH_2CH_2CH_2)_n-OH \qquad (4)$$

(In the formula, l, m, and n indicate the ratio of each unit, and do not indicate the bonding state. l, m, and n are each integers from 1 to 50.)
(4) Catalyst (boron trifluoride di-n-butyl ether dissolved in cyclohexane): 5 $\times$ $10^{-5}$ mols per 1 mol of trioxane

The block copolymer discharged from the polymerizer was charged into a 1-% aqueous solution of triethylamine to completely deactivate the polymerization catalyst. The block copolymer was filtered out, washed with acetone, and dried in a vacuum dryer set at 60 °C (hereinafter, this polymerization method is referred to as "polymerization method 1").

Next, 100 parts by mass of the above block copolymer were brought into contact with 2 parts by mass of water as a terminal stabilizer and 1 part by mass of triethylamine as a basic substance, which was melt-kneaded to hydrolyze and stabilize the hydroxy-oxymethylene chain, which was an unstable terminal chain. For end stabilization, the above block copolymer was first fed to a twin-screw extruder set at 200 °C provided with a vent, and melt-kneaded. Water/triethylamine were then continuously fed and kneaded with the block copolymer prior to extrusion. Formaldehyde, water, and triethylamine were then removed, and an end stabilization treatment of the block copolymer was carried out (sometimes referred to as end stabilization treatment 1). During the end stabilization treatment, the degree of vacuum was set to 4 kPa for degassing. The block copolymer from the extruder dies were extruded into strands and pelletized. A modified polyacetal II-1 was thus obtained.

The number average molecular weight (Mn1) of the resulting modified polyacetal II-1, the number average molecular weight (Mn2) of the modification segment, the ratio of the number average molecular weight (Mn2) of the modification segment (B) to the number average molecular weight (Mn1) of the modified polyacetal (Mn2/Mn1 $\times$ 100 (%)), and the ratio of an oxyethylene unit in the polyacetal segment (A) are summarized in Table 4.

[Production of modified polyacetal II-2, II-3, II-6, II-9, II-10, II-13, and II-14]

Modified polyacetals II-2, II-3, II-6, II-9, II-10, II-13, and II-14 were obtained by performing a block copolymer polymerization according to the method similar to the polymerization method 1, except that the amounts of trioxane, 1,3-dioxolane, and a hydrogenated polybutadiene represented by the formula (4) in which both ends had been hydroxylated fed per hour to the twin-shaft paddle-type continuous polymerizer were varied, and an end stabilization treatment of the block copolymers were performed in the manner similar to the end stabilization treatment 1.

The number average molecular weight (Mn1) of the resulting modified polyacetal, the number average molecular weight (Mn2) of the modification segment, the ratio of the number average molecular weight (Mn2) of the modification segment (B) to the number average molecular weight (Mn1) of the modified polyacetal (Mn2/Mn1 $\times$ 100 (%)), and the ratio of an oxyethylene unit in the polyacetal segment (A) are summarized in Table 4.

[Production of modified polyacetal II-4]

A modified polyacetal II-4 was obtained by performing polymerization and end stabilization in the manner similar to the modified polyacetal II-1, except that a hydrogenated polybutadiene represented by the formula (4) in which both ends had been hydroxylated and which had a number average molecular weight of 1376 was used.
The number average molecular weight (Mn1) of the resulting modified polyacetal II-4, the number average molecular weight (Mn2) of the modification segment, the ratio of the number average molecular weight (Mn2) of the modification segment (B) to the number average molecular weight (Mn1) of the modified polyacetal (Mn2/Mn1 × 100 (%)), and the ratio of an oxyethylene unit in the polyacetal segment (A) are summarized in Table 4.

[Production of modified polyacetal II-5]

A modified polyacetal II-5 was obtained by performing polymerization and end stabilization in the manner similar to the modified polyacetal II-1, except that a hydrogenated polybutadiene represented by the formula (4) in which both ends had been hydroxylated and which had a number average molecular weight of 9384 was used.
The number average molecular weight (Mn1) of the resulting modified polyacetal II-5, the number average molecular weight (Mn2) of the modification segment, the ratio of the number average molecular weight (Mn2) of the modification segment (B) to the number average molecular weight (Mn1) of the modified polyacetal (Mn2/Mn1 × 100 (%)), and the ratio of an oxyethylene unit in the polyacetal segment (A) are summarized in Table 4.

[Production of modified polyacetal II-7]

A modified polyacetal II-7 was obtained by performing a block copolymer polymerization according to the method similar to the polymerization method 1, except that a hydrogenated polybutadiene represented by the formula (5) in which both ends had been hydroxylated was used instead of the hydrogenated polybutadiene represented by the formula (4) in which both ends had been hydroxylated, and end stabilization of the block copolymer was performed in the manner similar to the end stabilization treatment 1.
The number average molecular weight (Mn1) of the resulting modified polyacetal II-7, the number average molecular weight (Mn2) of the modification segment, the ratio of the number average molecular weight (Mn2) of the modification segment (B) to the number average molecular weight (Mn1) of the modified polyacetal (Mn2/Mn1 × 100 (%)), and the ratio of an oxyethylene unit in the polyacetal segment (A) are summarized in Table 4.

[Chem. 11]

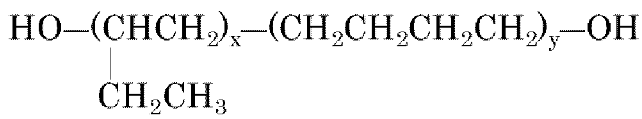

(5)

(In the formula, x and y indicate the ratio of each unit, and do not indicate the bonding state. x and y are each integers from 1 to 50.)

[Production of modified polyacetal II-8]

A modified polyacetal II-8 was obtained by performing a block copolymer polymerization according to the method similar to the polymerization method 1, except that a hydrogenated polybutadiene represented by the formula (6) in which one end had been hydroxylated was used instead of the hydrogenated polybutadiene represented by the formula (4) in which both ends had been hydroxylated, and end stabilization of the block copolymer was performed in the manner similar to the end stabilization treatment 1.
The number average molecular weight (Mn1) of the resulting modified polyacetal II-8, the number average molecular weight (Mn2) of the modification segment, the ratio of the number average molecular weight (Mn2) of the modification segment (B) to the number average molecular weight (Mn1) of the modified polyacetal (Mn2/Mn1 × 100 (%)), and the ratio of an oxyethylene unit in the polyacetal segment (A) are summarized in Table 4.

[Chem. 12]

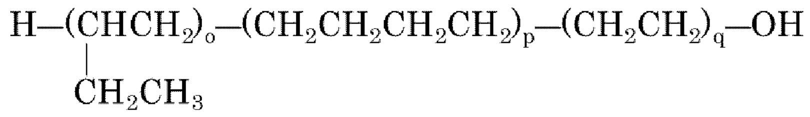

(6)

(In the formula, o, p, and q indicate the ratio of each unit, and do not indicate the bonding state. o, p, and q are each integers from 1 to 50.)

[Production of modified polyacetal II-11]

A modified polyacetal II-11 was obtained by performing polymerization and end stabilization in the manner similar to the modified polyacetal II-1, except that a hydrogenated polybutadiene represented by the formula (4) in which both ends had been hydroxylated and which had a number average molecular weight of 20000 was used.

The number average molecular weight (Mn1) of the resulting modified polyacetal II-11, the number average molecular weight (Mn2) of the modification segment, the ratio of the number average molecular weight (Mn2) of the modification segment (B) to the number average molecular weight (Mn1) of the modified polyacetal (Mn2/Mn1 $\times$ 100 (%)), and the ratio of an oxyethylene unit in the polyacetal segment (A) are summarized in Table 4.

[Production of modified polyacetal II-12]

A modified polyacetal II-12 was obtained by performing polymerization and end stabilization in the manner similar to the modified polyacetal II-1, except that a hydrogenated polybutadiene represented by the formula (4) in which both ends had been hydroxylated and which had a number average molecular weight of 230 was used.

The number average molecular weight (Mn1) of the resulting modified polyacetal II-12, the number average molecular weight (Mn2) of the modification segment, the ratio of the number average molecular weight (Mn2) of the modification segment (B) to the number average molecular weight (Mn1) of the modified polyacetal (Mn2/Mn1 $\times$ 100 (%)), and the ratio of an oxyethylene unit in the polyacetal segment (A) are summarized in Table 4.

[Production of unmodified polyacetal II-1]

An unmodified polyacetal II-1 was obtained by performing polymerization and end stabilization as in the production of the unmodified polyacetal II-1, except that an equal mol of methanol was used instead of the hydrogenated polybutadiene in which both ends had been hydroxylated.

[Production of polyacetal mixture]

To 100 parts by mass of each of the above modified polyacetal resin, 0.05 parts by mass of nylon 66 and 0.3 parts by mass of calcium stearate were uniformly added and mixed, which was fed to a twin screw extruder provided with a vent (L/D = 40) set to 200 °C and was pelletized while degassing under reduced pressure at 90 kPa. Then, the resultant was dried at 100 °C for 2 hours to obtain modified polyacetal mixtures II-1 to II-14.

An unmodified polyacetal mixture II-15 was obtained by blending the additives in the same manner as above, except that 100 parts by mass of the unmodified polyacetal were used instead of the modified polyacetal.

[Production of composition for inorganic powder injection molding for acid degreasing]

In an MS-type pressure kneader (Model DS3-10, manufactured by Nihon Spindle Manufacturing Co., Ltd.) heated to 170 °C, the above modified polyacetal mixtures II-1 to II-14, a polypropylene (Sumitomo NOBLEN U501E1, manufactured by Sumitomo Chemical Co., Ltd.) having an MFR of 120 g/10 min under the condition of 230 °C, 2.16 kg as a polyolefin having an MFR of 60 g/10 min or more, and polytetramethylene ether glycol (PTMG3000, manufactured by Mitsubishi Chemical Corporation) as a fluidity imparting agent were charged so that the respective amounts were 79 mass%, 1.4 mass%, and 7 mass% with respect to 100 mass% of organic binder, and then kneaded for 30 minutes.

SUS316L (DAP316L, manufactured by Daido Steel Co., Ltd., melting point: 1380 °C, average particle diameter: 10 $\mu$m) was then added as a sinterable inorganic powder so that the amount was 93 mass% with respect to the total weight of the composition for inorganic powder injection molding, and kneaded for 60 minutes.

The resulting kneaded product was fed into a Willey-type pulverizer (manufactured by Yoshida Seisakusho Co., Ltd.) and pulverized to obtain compositions for inorganic powder injection molding II-1 to II-14.
In addition, a composition for inorganic powder injection molding II-15 was obtained by mixing polypropylene, polytetramethylene ether glycol, and SUS316L in the same manner, except that the unmodified polyacetal mixture 1 was used instead of the modified polyacetal mixtures II-1 to II-14.
Furthermore, a composition for inorganic powder injection molding II-16 was obtained in the same manner as in Example 1, except that polyethylene glycol (PEG8000, manufactured by Aldrich) was used as a fluidity imparting agent.

[Production of composition for inorganic powder injection molding for thermal degreasing]

In an MS-type pressure kneader (Model DS3-10, manufactured by Nihon Spindle Manufacturing Co., Ltd.) heated to 170 °C, the above modified polyacetal mixtures II-1 to II-14, a polypropylene (Sumitomo NOBLEN U501E1, manufactured by Sumitomo Chemical Co., Ltd.) having an MFR of 120 g/10 min under the condition of 230 °C, 2.16 kg as a polyolefin having an MFR of 60 g/10 min or more, and paraffin wax (PW145, manufactured by NIPPON SEIRO CO., LTD.) as a fluidity imparting agent were charged so that the respective amounts were 25 mass%, 25 mass%, and 50 mass% with respect to 100 mass% of the organic binder, and then kneaded for 30 minutes.
SUS316L (DAP316L, manufactured by Daido Steel Co., Ltd., melting point: 1380 °C, average particle diameter: 10 μm) was then added as a sinterable inorganic powder so that the amount was 93 mass% with respect to the total weight of the composition for inorganic powder injection molding, and kneaded for 60 minutes.
The resulting kneaded product was fed into a Willey-type pulverizer (manufactured by Yoshida Seisakusho Co., Ltd.) and pulverized to obtain compositions for inorganic powder injection molding 11-17 to 11-30.
In addition, a compositions for inorganic powder injection molding 11-31 was obtained by mixing polypropylene, paraffin wax, and SUS316L in the same manner, except that the unmodified polyacetal mixture II-1 was used instead of the modified polyacetal mixtures 11-1 to 11-14.
In addition, a compositions for inorganic powder injection molding 11-32 was obtained in the same manner as in Example 11-17, except that 40 mass% of paraffin wax (PW145, manufactured by NIPPON SEIRO CO., LTD.) and 10% of polytetramethylene ether glycol (PTMG3000, manufactured by Mitsubishi Chemical Corporation) were used as a fluidity imparting agent.

[Evaluations]

1. Evaluation of thermal stability of polyacetal

The weight average molecular weights (Mw1) of the modified and unmodified polyacetals were determined using gel permeation chromatography (HLC-8120, manufactured by Tosoh Corporation).
Soxhlet extraction was carried out for 50 g of each composition for inorganic powder injection molding using 120 mL of chloroform at 80 °C for 8 hours. The residue was then vacuum dried at 50 °C for 3 hours and the modified polyacetal was extracted using hexafluoroisopropanol. The weight average molecular weights (Mw2) of the resulting modified and unmodified polyacetals were determined using gel permeation chromatography. The thermal stability of each modified or unmodified polyacetals was determined using the polyacetal molecular weight reduction ratio expressed in the following formula (7) from the obtained molecular weights. The results are summarized in Tables 5 to 6.

$$\text{Polyacetal molecular weight reduction ratio (\%)} = (1 - Mw2 / Mw1) \times 100 \quad (7)$$

2. Evaluation of injection moldability of composition for inorganic powder injection molding

A green molded specimen in a dumbbell shape in accordance with ISO 10724-1 was molded at 175 to 200 °C using an injection molding machine (ROBOSHOT α-50iA manufactured by FANUC CORPORATION). The specimen was visually observed to check whether there was any deformation and evaluated as good if no deformation was observed, or poor if deformation was observed. The results are summarized in Tables 5 to 6.

3. Observation of sintered body

[Acid degreasing and sintering]

The above green molded bodies were set in a degreasing furnace while being supported at two points with an

interval of 50 mm. The above furnace was heated to 110 °C and the inside was replaced with nitrogen gas at 500 l/h for 30 minutes. Then, 98% nitric acid was supplied at 30 ml/h while the nitrogen purge was kept. Degreasing was carried out. The conditions were as follows: nitric acid was kept to be fed for 2.5 hours; subsequently, the inside of the furnace was replaced with 500 l/h of nitrogen gas for 45 minutes, and temperature was reduced to room temperature.

The degreased molded body was then transferred to a sintering furnace, and after the inside of the furnace was replaced with argon gas, the temperature was increased from room temperature to 600 °C at 5 °C/min. After the temperature was held at 600 °C for 1 hour, the temperature was raised to 1350 °C under a reduced pressure of 1 to 5 Torr at 5 °C/min and held for 1 hour to perform sintering, followed by cooling to room temperature.

The appearance of the sintered body was visually observed, and evaluated as good if there were no cracks or swelling, or poor if there were cracks or swelling. Results are summarized in Table 5.

Samples without cracks or swelling in the visual observation were allowed to stand under the conditions of room temperature of 23 °C and a humidity of 50% RH for 24 hours and then weighed. The samples were then immersed in water for 24 hours and weighed in water. The samples were then taken out of the water and weighed after water was wiped off. The density was calculated using these weights, and the ratio (%) to the density of SUS316L used (7.8 g/cm$^3$) was calculated. Results are summarized in Table 5.

[Thermal degreasing and sintering]

The above molded bodies were set in a degreasing furnace while being supported at two points with an interval of 50 mm. Then, degreasing was carried out by purging the inside of the degreasing furnace with nitrogen gas, raising the temperature to 500 °C at a rate of 30 °C/hr as the first condition or 45 °C/hr as the second condition, and maintaining the temperature to 500 °C for 2 hours. The degreased molded body was then transferred to a sintering furnace, and after the inside of the furnace was replaced with argon gas, the temperature was increased from room temperature to 600 °C at 5 °C/min. After the temperature was held at 600 °C for 1 hour, the temperature was raised to 1350 °C under a reduced pressure of 1 to 5 Torr at 5 °C/min and held for 1 hour to perform sintering, followed by cooling to room temperature.

The appearance of the sintered body was visually observed, and evaluated as good if there were no cracks or swelling, or poor if there were cracks or swelling. Results are summarized in Table 6.

Samples without cracks or swelling in the visual observation were allowed to stand under the conditions of room temperature of 23 °C and a humidity of 50% RH for 24 hours and then weighed. The samples were then immersed in water for 24 hours and weighed in water. The samples were then taken out of the water and weighed after water was wiped off. The density was calculated using these weights, and the ratio (%) to the density of SUS316L used (7.8 g/cm$^3$) was calculated. Results are summarized in Table 6.

| Polyacetal species | Polyacetal segment (A) | Modification segment (B) | Polymer structure | Modified polyacetal Mn1 | Modification segment Mn2 | Mn2/Mn1 | Ratio of oxyethylene (mol%) |
|---|---|---|---|---|---|---|---|
| Modified polyacetal II-1 | Polyacetal copolymer | Hydrogenated polybutadiene-1 | ABA | 200000 | 2390 | 1.2 | 1.4 |
| Modified polyacetal | Polyacetal copolymer | Hydrogenated | ABA | 100000 | 2390 | 2.4 | 1.4 |
| Modified polyacetal II-3 | Polyacetal copolymer | Hydrogenated polybutadiene-1 | ABA | 420000 | 2390 | 0.6 | 1.4 |
| Modified polyacetal II-4 | Polyacetal copolymer | Hydrogenated polybutadiene-1 | ABA | 100000 | 1376 | 1.4 | 1.4 |
| Modified polyacetal II-5 | Polyacetal copolymer | Hydrogenated polybutadiene-1 | ABA | 100000 | 9384 | 9.4 | 1.4 |
| Modified polyacetal II-6 | Polyacetal copolymer | Hydrogenated polybutadiene-1 | ABA | 100000 | 2390 | 2.4 | 4.5 |

(continued)

| Polyacetal species | Polyacetal segment (A) | Modification segment (B) | Polymer structure | Modified polyacetal Mn1 | Modification segment Mn2 | Mn2/Mn1 | Ratio of oxyethylene (mol%) |
|---|---|---|---|---|---|---|---|
| Modified polyacetal II-7 | Polyacetal copolymer | Hydrogenated polybutadiene-2 | ABA | 100000 | 2390 | 2.4 | 1.4 |
| Modified polyacetal II-8 | Polyacetal copolymer | Hydrogenated polybutadiene-3 | BAB | 200000 | 2390 | 1.2 | 1.4 |
| Modified polyacetal II-9 | Polyacetal copolymer | Hydrogenated polybutadiene-1 | ABA | 100000 | 2390 | 2.4 | 0.05 |
| Modified polyacetal II-10 | Polyacetal copolymer | Hydrogenated polybutadiene-1 | ABA | 100000 | 2390 | 2.4 | 7.5 |
| Modified polyacetal II-11 | Polyacetal copolymer | Hydrogenated polybutadiene-1 | ABA | 100000 | 20000 | 200 | 1.4 |
| Modified polyacetal II-12 | Polyacetal copolymer | Hydrogenated polybutadiene-1 | ABA | 100000 | 230 | 0.2 | 1.4 |
| Modified polyacetal II-13 | Polyacetal copolymer | Hydrogenated polybutadiene-1 | ABA | 5500 | 2390 | 43.5 | 1.4 |
| Modified polyacetal II-14 | Polyacetal copolymer | Hydrogenated polybutadiene-1 | ABA | 620000 | 2390 | 0.4 | 1.4 |
| Unmodified polyacetal II-1 | Polyacetal copolymer | | | 100000 | - | 0.0 | 1.4 |

[Table 5]

| | Examples | | | | | | | | | Comparative Example | | | | | | |
|---|---|---|---|---|---|---|---|---|---|---|---|---|---|---|---|---|
| Composition for inorganic powder injection molding | II-1 | II-2 | II-3 | II-4 | II-5 | II-6 | II-7 | II-8 | II-16 | II-9 | II-10 | II-11 | II-12 | II-13 | II-14 | II-15 |
| Modified polyacetal mixture species | II-1 | II-2 | II-3 | II-4 | II-5 | II-6 | II-7 | II-8 | II-1 | I-9 | II-10 | II-11 | II-12 | II-13 | II-14 | - |
| Unmodified polyacetal mixture species | - | - | - | - | - | - | - | - | - | - | - | - | - | - | - | II-1 |
| POM molecular weight reduction ratio | 10% | 21% | 35% | 25% | 13% | 8% | 20% | 8% | 38% | 43% | 9% | 8% | 60% | 56% | 18% | 65% |
| Injection moldability | Good | Good | Good | Good | Good | Good | Good | Good | Good | Good | Poor | Poor | Good | Poor | Poor | Poor |
| Presence or absence of cracking and swelling after sintering | Good | Good | Good | Good | Good | Good | Good | Good | Good | Poor | Poor | Poor | Poor | Poor | Poor | Poor |
| Ratio to standard density | 98% | 96% | 93% | 95% | 97% | 99% | 96% | 99% | 92% | - | - | - | - | - | - | - |

[Table 6]

| | Examples | | | | | | | | | Comparative Example | | | | | | |
|---|---|---|---|---|---|---|---|---|---|---|---|---|---|---|---|---|
| Composition for inorganic powder injection molding | II-17 | II-18 | II-19 | II-20 | II-21 | II-22 | II-23 | II-24 | II-32 | II-25 | II-26 | II-27 | II-28 | II-29 | II-30 | II-31 |
| Modified polyacetal mixture species | II-1 | II-2 | II-3 | II-4 | II-5 | II-6 | II-7 | II-8 | II-1 | II-9 | II-10 | II-11 | II-12 | II-13 | II-14 | - |
| Unmodified polyacetal mixture species | - | - | - | - | | - | - | - | - | - | - | - | - | - | - | II-1 |
| POM molecular weight reduction ratio | 3% | 12% | 23% | 15% | 6% | 2% | 12% | 2% | 2% | 30% | 9% | 2% | 49% | 45% | 10% | 53% |
| Injection moldability | Good | Good | Good | Good | Good | Good | Good | Good | Good | Good | Poor | Poor | Poor | Poor | Poor | Poor |
| Presence or absence of cracking and swelling after sintering | Good | Good | Good | Good | Good | Good | Good | Good | Good | Poor | Poor | Poor | Poor | Poor | Poor | Poor |
| Ratio to standard density | 98% | 97% | 94% | 95% | 97% | 98% | 97% | 98% | 98% | - | - | - | - | - | - | - |

## INDUSTRIAL APPLICABILITY

The composition for inorganic powder injection molding of the present disclosure is suitable for applications of inorganic powder injection molding.

## Claims

1. A composition for inorganic powder injection molding comprising:

   a sinterable inorganic powder; and
   an organic binder comprising a modified polyacetal (C) including a polyacetal segment (A) and a modification segment (B),
   wherein a melt flow rate (MFR) of the modified polyacetal (C) measured under conditions of 190 °C, 2.16 kg is 70 g/10 min or more and 160 g/10 min or less, and
   a number average molecular weight of the modification segment (B) is 500 to 10,000.

2. The composition for inorganic powder injection molding according to claim 1, wherein the modification segment (B) is a polyolefin.

3. The composition for inorganic powder injection molding according to claim 1 or 2, wherein the modification segment (B) is a hydrogenated polybutadiene.

4. The composition for inorganic powder injection molding according to claim 1 or 2, wherein a number average molecular weight of the modified polyacetal (C) is 10,000 to 50,000.

5. The composition for inorganic powder injection molding according to claim 1 or 2, wherein the polyacetal segment (A) is composed of 95.0 to 99.9 mol% of an oxymethylene unit and 0.1 to 5.0 mol% of an oxyalkylene unit represented by the formula (1):

   [Chem. 1]

   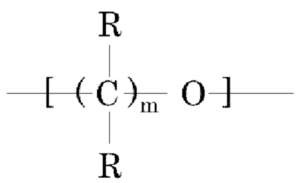

   (1)

   (in the formula, R is independently selected from hydrogen, an alkyl group, a substituted alkyl group, an aryl group, and a substituted aryl group, and m is an integer selected from 2 to 6).

6. The composition for inorganic powder injection molding according to claim 1 or 2, wherein the modified polyacetal (C) is a block copolymer represented by (A)-(B)-(A).

7. The composition for inorganic powder injection molding according to claim 1 or 2, further comprising a lubricant.

8. An injection-molded body comprising the composition for inorganic powder injection molding according to claim 1 or 2.

9. A sintered body produced by degreasing and sintering the injection-molded body according to claim 8.

10. A composition for inorganic powder injection molding comprising:

   a sinterable inorganic powder; and

an organic binder comprising a modified polyacetal (C) including a polyacetal segment (A) and a modification segment (B),
wherein a number average molecular weight of the modified polyacetal (C) is 10000 to 500000,
a number average molecular weight of the modification segment (B) is 500 to 10000, and
the polyacetal segment (A) is composed of 95.0 to 99.9 mol% of an oxymethylene unit and 0.1 to 5.0 mol% of an oxyalkylene unit represented by the formula (1):

[Chem. 2]

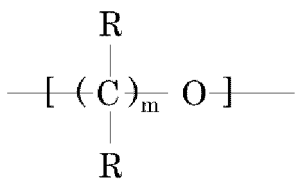

(1)

(in the formula, R is independently selected from the group consisting of hydrogen, an alkyl group, a substituted alkyl group, an aryl group, and a substituted aryl group, and m is an integer selected from 2 to 6).

**11.** The composition for inorganic powder injection molding according to claim 10, wherein a ratio of a number average molecular weight (Mn2) of the modification segment (B) to a number average molecular weight (Mn1) of the modified polyacetal (C) (Mn2/Mn1 × 100 (%)) is 0.5% or more and 10% or less.

**12.** The composition for inorganic powder injection molding according to claim 10 or 11, wherein the modification segment (B) is a polyolefin.

**13.** The composition for inorganic powder injection molding according to claim 10 or 11, wherein the modification segment (B) is a hydrogenated polybutadiene.

**14.** The composition for inorganic powder injection molding according to claim 10 or 11, wherein the modified polyacetal (C) is a block copolymer represented by (A)-(B)-(A).

**15.** The composition for inorganic powder injection molding according to claim 10 or 11, wherein a polyacetal molecular weight reduction ratio of a weight average molecular weight of a modified polyacetal extracted from the composition for inorganic powder injection molding in chloroform under a condition of 80 °C for 8 hours to a weight average molecular weight of the modified polyacetal (C) is 40% or less.

**16.** The composition for inorganic powder injection molding according to claim 10 or 11, comprising a polyolefin resin having a melt flow rate (MFR) measured under conditions of 230 °C, 2.16 kg of 60 g/10 min or more.

**17.** An injection-molded body comprising the composition for inorganic powder injection molding according to claim 10 or 11.

**18.** A sintered body produced by degreasing and sintering the injection-molded body according to claim 17.

**INTERNATIONAL SEARCH REPORT**

International application No. **PCT/JP2022/026526**

**A. CLASSIFICATION OF SUBJECT MATTER**

***B22F 3/02***(2006.01)i; ***B22F 3/10***(2006.01)i; ***B28B 1/24***(2006.01)i; ***C04B 35/634***(2006.01)i; ***C08G 2/38***(2006.01)i; ***C08K 3/011***(2018.01)i; ***C08K 3/013***(2018.01)i; ***C08L 59/00***(2006.01)i

FI: B22F3/02 M; B22F3/02 S; B22F3/10 C; B28B1/24; C04B35/634 200; C08G2/38; C08K3/011; C08K3/013; C08L59/00

According to International Patent Classification (IPC) or to both national classification and IPC

**B. FIELDS SEARCHED**

Minimum documentation searched (classification system followed by classification symbols)

B22F3/02; B22F3/10; B28B1/24; C04B35/634; C08G2/38; C08K3/011; C08K3/013; C08L59/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 09-111306 A (POLYPLASTICS CO) 28 April 1997 (1997-04-28) claims 1-2, paragraphs [0008], [0012]-[0017] | 1–18 |
| Y | JP 4560261 B2 (ASAHI KASEI KABUSHIKI KAISHA) 13 October 2010 (2010-10-13) claims 1-14, paragraphs [0005], [0044]-[0092], tables 1-16 | 1-18 |
| A | WO 2019/219522 A1 (HOGANAS AB) 21 November 2019 (2019-11-21) entire text | 1-18 |
| A | JP 2002-029856 A (POLYPLASTICS CO) 29 January 2002 (2002-01-29) entire text | 1–18 |
| A | JP 2001-106581 A (POLYPLASTICS CO) 17 April 2001 (2001-04-17) entire text | 1-18 |
| A | JP 2004-076153 A (DOWA MINING CO LTD) 11 March 2004 (2004-03-11) entire text | 1-18 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 August 2022** | **16 August 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/026526**

| Patent document cited in search report | Publication date (day/month/year) | Patent family member(s) | Publication date (day/month/year) |
|---|---|---|---|
| JP 09-111306 A | 28 April 1997 | (Family: none) | |
| JP 4560261 B2 | 13 October 2010 | US 2002/0016395 A1<br>claims 1-14, paragraphs [0007], [0108]-[0245], tables 1-16<br>WO 2001/009213 A1<br>DE 10082535 B | |
| WO 2019/219522 A1 | 21 November 2019 | US 2021/0229174 A1<br>entire text | |
| JP 2002-029856 A | 29 January 2002 | (Family: none) | |
| JP 2001-106581 A | 17 April 2001 | (Family: none) | |
| JP 2004-076153 A | 11 March 2004 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001106581 A
- JP 2009542880 A
- JP 2001514017 A
- JP H07293290 A
- JP 2003172273 A
- WO 2001009213 A1
- JP H09111306 A
- JP 2004076153 A
- JP 4560261 B